(19) Europäisches Patentamt / European Patent Office / Office européen des brevets

(11) **EP 4 441 706 B1**

(12) **EUROPEAN PATENT SPECIFICATION**

(45) Date of publication and mention
of the grant of the patent:
**15.07.2026 Bulletin 2026/29**

(21) Application number: **22840842.3**

(22) Date of filing: **02.12.2022**

(51) International Patent Classification (IPC):
*G06T 7/11* (2017.01)     *G06T 5/00* (2024.01)

(52) Cooperative Patent Classification (CPC):
**G06T 5/90; G06T 7/11;** G06T 2207/20021;
G06T 2207/20072; G06T 2207/20208

(86) International application number:
**PCT/US2022/051664**

(87) International publication number:
**WO 2023/102189 (08.06.2023 Gazette 2023/23)**

(54) **ITERATIVE GRAPH-BASED IMAGE ENHANCEMENT USING OBJECT SEPARATION**

ITERATIVE GRAPHENBASIERTE BILDVERBESSERUNG MITTELS OBJEKTTRENNUNG

AMÉLIORATION ITÉRATIVE DES IMAGES BASÉE SUR LES GRAPHES EN UTILISANT LA SÉPARATION DES OBJETS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **03.12.2021 EP 21212271
03.12.2021 US 202163285570 P**

(43) Date of publication of application:
**09.10.2024 Bulletin 2024/41**

(73) Proprietor: **Dolby Laboratories Licensing
Corporation
San Francisco, CA 94103 (US)**

(72) Inventors:
• **LAZRI, Zachary McBride
Baltimore, Maryland 21218 (US)**
• **KADU, Harshad
Santa Clara, California 95054 (US)**
• **SU, Guan-Ming
San Francisco, California 94103 (US)**

(74) Representative: **Dolby International AB
Patent Group Europe
77 Sir John Rogerson's Quay
Block C
Grand Canal Docklands
Dublin, D02 VK60 (IE)**

(56) References cited:
**WO-A1-2011/141853**

• **BEILEI XU ET AL: "Object-based multilevel contrast stretching method for image enhancement", IEEE TRANSACTIONS ON CONSUMER ELECTRONICS, IEEE SERVICE CENTER, NEW YORK, NY, US, vol. 56, no. 3, August 2010 (2010-08-01), pages 1746 - 1754, XP011320092, ISSN: 0098-3063**
• **YAN-TSUNG PENG ET AL: "A Sub-Image Edge Preservation method for histogram equalization", 2013 9TH INTERNATIONAL CONFERENCE ON INFORMATION, COMMUNICATIONS & SIGNAL PROCESSING, IEEE, 10 December 2013 (2013-12-10), pages 1 - 4, XP032584492, DOI: 10.1109/ICICS.2013.6782961**
• **ALESSANDRO FOI ET AL: "Pointwise Shape-Adaptive DCT for High-Quality Denoising and Deblocking of Grayscale and Color Images", IEEE TRANSACTIONS ON IMAGE PROCESSING, IEEE, USA, vol. 16, no. 5, May 2007 (2007-05-01), pages 1395 - 1411, XP011176788, ISSN: 1057-7149, DOI: 10.1109/TIP.2007.891788**

**Description**

1. Cross-Reference to Related Applications

This application claims the benefit of priority from U.S. patent application No. 63/285,570 and European patent application 21212271.7, both filed on 03 December 2021.

2. Field of the Disclosure

This application relates generally to systems and methods of enhancing images using graph-based inter- and intra- object separation.

3. Background

Beilei Xu et al.: "Object-based multilevel contrast stretching method for image enhancement", IEEE Transactions on Consumer Electronics, IEEE Service Center, New York, USA, vol. 56, no. 3, 1 August 2010, pages 1746-1754, XP011320092, discloses an object-based multilevel contrast stretching method to enhance image structure. The purpose of image enhancement is to improve the perceptibility of information contained in an image. Since the human visual system tends to extract image structure, enhancing the structural features can improve perceived image quality. The method first segments the image into its constitute objects, which are treated as image structural components, using morphological watersheds and region merging; then separately stretches the image contrast at interobject level and intra-object level in different ways. At interobject level, an approach of stretching between adjacent local extremes is used to adequately enlarge the local dynamic range of gray levels between objects. At intra-object level, the uniform linear stretching is used to enhance the textural features of objects while maintaining their homogeneity. Since the method directly operates on the object, it can avoid introducing ringing, blocking or other false contouring artifacts in structural appearance; moreover, it can effectively suppress over emphasizing of noise and roughly preserve the overall brightness of the image. Experimental results show that the method can produce enhanced images with more natural appearance in comparison with some classical methods.

WO 2011/141853 A1 discloses an apparatus for performing a color enhancement of an image that comprises a segmenter which generates image segments that specifically may be relatively small. An analyzer identifies a neighbor segment for a first segment and a color enhancer applies a color enhancement algorithm to the first segment. An adjuster is arranged to adjust a characteristic of the color enhancement algorithm for the first segment in response to a relative geometric property of a resulting group of color points in a color space and a neighbor group of color points in the color space. The resulting group of color points comprises a color point for at least some color enhanced pixels of the first segment. The neighbor group of color points comprises a color point for at least some pixels of the at least one neighbor segment. The segmentation based color enhancement considering inter-segment color properties may provide improved image quality.

As used herein, the term 'dynamic range' (DR) may relate to a capability of the human visual system (HVS) to perceive a range of intensity (e.g., luminance, luma) in an image, e.g., from darkest grays (blacks) to brightest whites (highlights). In this sense, DR relates to a 'scene-referred' intensity. DR may also relate to the ability of a display device to adequately or approximately render an intensity range of a particular breadth. In this sense, DR relates to a 'display-referred' intensity. Unless a particular sense is explicitly specified to have particular significance at any point in the description herein, it should be inferred that the term may be used in either sense, e.g. interchangeably.

As used herein, the term high dynamic range (HDR) relates to a DR breadth that spans some 14-15 orders of magnitude of the human visual system (HVS). In practice, the DR over which a human may simultaneously perceive an extensive breadth in intensity range may be somewhat truncated, in relation to HDR. As used herein, the terms enhanced dynamic range (EDR) or visual dynamic range (VDR) may individually or interchangeably relate to the DR that is perceivable within a scene or image by a human visual system (HVS) that includes eye movements, allowing for some light adaptation changes across the scene or image.

In practice, images comprise one or more color components (e.g., luma Y and chroma Cb and Cr) wherein each color component is represented by a precision of n-bits per pixel (e.g., n=8). Using linear luminance coding, images where n<8 are considered images of standard dynamic range, while images where n>8 (e.g., color 24-bit JPEG images) may be considered images of enhanced dynamic range. EDR and HDR images may also be stored and distributed using high-precision (e.g., 16-bit) floating-point formats, such as the OpenEXR file format developed by Industrial Light and Magic.

As used herein, the term "metadata" relates to any auxiliary information that is transmitted as part of the coded bitstream and assists a decoder to render a decoded image. Such metadata may include, but are not limited to, color space or gamut information, reference display parameters, and auxiliary signal parameters, as those described herein.

Most consumer desktop displays currently support luminance of 200 to 300 cd/m$^2$ or nits. Most consumer HDTVs range from 300 to 500 nits with new models reaching 1000 nits (cd/m$^2$). Such conventional displays thus typify a lower dynamic range (LDR), also referred to as a standard dynamic range (SDR), in relation to HDR or EDR. As the availability of HDR content grows due to advances in both capture equipment (e.g., cameras) and HDR displays (e.g., the PRM-4200 professional reference monitor from Dolby Laboratories), HDR content may be color graded and displayed on HDR displays that support higher dynamic ranges (e.g., from 1,000 nits to 5,000 nits or more).

Early methods of digital image enhancement enhanced entire images with global contrast adjustment using histogram equalization, color correction with color balancing techniques, or a combination. Advanced image enhancement techniques use the information surrounding a pixel to locally enhance the image, such as with local contrast enhancement, local tone mapping, image sharpening, and bilateral filtering. Additionally, methods for image segmentation have provided for precise identification of objects within an image.

BRIEF SUMMARY OF THE DISCLOSURE

The invention is defined by the independent claims. The dependent claims concern optional features of some embodiments of the invention. Embodiments provided herein utilize segmentation information to improve the visual appeal of an image. For example, segmentation information can be used to (i) enhance objects independently and (ii) enhance objects with respect to other objects in its vicinity. This object-specific enhancement boosts visual quality of the image by improving the intra-object and inter-object contrast.

While proposed methods are capable of improving images of any kind, additional benefits may be found in enriching the subjective quality of HDR images displayed on mobile screens. HDR images have a higher luminance range than traditional standard dynamic range (SDR) images. This increase in luminance range allows HDR images to represent details in dark and bright regions effectively, without clipping dark areas or oversaturating bright areas. Additionally, HDR images have a wider color representation compared to SDR images. Due to the size of mobile screens, these advantages of HDR images are often subdued. Embodiments described herein exploit the knowledge of objects within an image to visually enhance the HDR images for a mobile screen.

Various aspects of the present disclosure relate to devices, systems, and methods for enhancing images using graph-based inter- and intra- object separation. While certain embodiments are directed to HDR video data, video data may also include Standard Dynamic Range (SDR) video data and other User Generated Content (UGC), such as gaming content.

In one exemplary aspect of the present disclosure, there is provided a video delivery system for iterative graph-based image enhancement of an image frame. The video delivery system comprises a processor to perform processing of the image frame. The processor is configured to receive an object within the image frame, the object including a plurality of pixels. The processor is configured to perform an inter-object point cloud separation operation on the image, expand the plurality of pixels of the object, and perform a spatial enhancement operation on the plurality of pixels of the object. The processor is configured to generate an output image based on the inter-object point cloud separation operation, the expansion of the plurality of pixels, and the spatial enhancement operation.

In another exemplary aspect of the present disclosure, there is provided an iterative method for image enhancement of an image frame. The method comprises receiving an object within the image frame, the object including a plurality of pixels. The method comprises performing an inter-object point cloud separation operation on the image, expanding the plurality of pixels of the object, and performing a spatial enhancement operation on the plurality of pixels of the object. The method comprises generating an output image based on the inter-object point cloud separation operation, the expansion of the plurality of pixels, and the spatial enhancement operation.

In another exemplary aspect of the present disclosure, there is provided a non-transitory computer-readable medium storing instructions that, when executed by a processor of a video delivery system, cause the video delivery system to perform operations comprising receiving an object within an image frame, the object including a plurality of pixels, performing an inter-object point cloud separation operation on the image, expanding the plurality of pixels of the object, performing a spatial enhancement operation on the plurality of pixels of the object, and generating an output image based on the inter-object point cloud separation operation, the expansion of the plurality of pixels, and the spatial enhancement operation.

In this manner, various aspects of the present disclosure provide for the display of images, either having a high dynamic range and high resolution or a standard resolution, and effect improvements in at least the technical fields of image projection, holography, signal processing, and the like.

DESCRIPTION OF THE DRAWINGS

These and other more detailed and specific features of various embodiments are more fully disclosed in the following description, reference being had to the accompanying drawings, in which:

FIG. 1 depicts an example process for a video delivery pipeline.

FIG. 2A depicts an example HDR image.

FIG. 2B depicts the example HDR image of FIG. 2A following an image segmentation process.

FIG. 3 depicts example pixel levels in a BFS search.

FIGS. 4A-4B depict example image-to-graph structure relationships.

FIGS. 5A-5E depict an example method of using a priority queue to process the graph structure of FIG. 4B.

FIG. 6 depicts an example method of enhancing an image.

FIG. 7 depicts example graphs illustrating an object enhancement process.

FIG. 8 depicts an example graph illustrating a plurality of sigmoid curves.

FIGS 9A-9C depict an example inter-object point cloud separation process.

FIG. 10 depicts an example luminance-saturation graph of an object before and after the inter-object point cloud separation process of FIGS. 9A-9C.

FIG. 11 depicts an example method of an inter-object point cloud separation process.

FIG. 12 depicts an example luminance-saturation graph of an object before and after an intra-object point cloud expansion process.

FIG. 13 depicts example mean luminance and luminance-saturation graphs of objects in an image undergoing an inter-object point cloud separation process and an intra-object point cloud expansion process.

FIG. 14 depicts an example method of an intra-object point cloud expansion process.

FIGS. 15A-15E depict an example segmented luminance square of an object undergoing an intra-object spatial enhancement process.

FIG. 16 depicts an example method of an intra-object spatial enhancement process.

FIG. 17 depicts an example method of an image quality assessment.

FIG. 18 depicts an example method of an iterative image enhancement process.

FIGS. 19A-19B depict example graphs of identifying a stopping criterion for the iterative image enhancement process of FIG. 18.

DETAILED DESCRIPTION

This disclosure and aspects thereof can be embodied in various forms, including hardware, devices or circuits controlled by computer-implemented methods, computer program products, computer systems and networks, user interfaces, and application programming interfaces; as well as hardware-implemented methods, signal processing circuits, memory arrays, application specific integrated circuits (ASICs), field programmable gate arrays (FPGAs), and the like. The foregoing is intended solely to give a general idea of various aspects of the present disclosure and does not limit the scope of the disclosure in any way.

In the following description, numerous details are set forth, such as optical device configurations, timings, operations, and the like, to provide an understanding of one or more aspects of the present disclosure. It will be readily apparent to one skilled in the art that these specific details are merely exemplary and not intended to limit the scope of this application.

Moreover, while the present disclosure focuses mainly on examples in which the various circuits are used in digital projection systems, it will be understood that these are merely examples. Disclosed systems and methods may be implemented in display devices, such as with an OLED display, an LCD display, a quantum dot display, or the like. It will further be understood that the disclosed systems and methods can be used in any device in which there is a need to project light; for example, cinema, consumer, and other commercial projection systems, heads-up displays, virtual reality displays, and the like.

**Video Coding of HDR Signals**

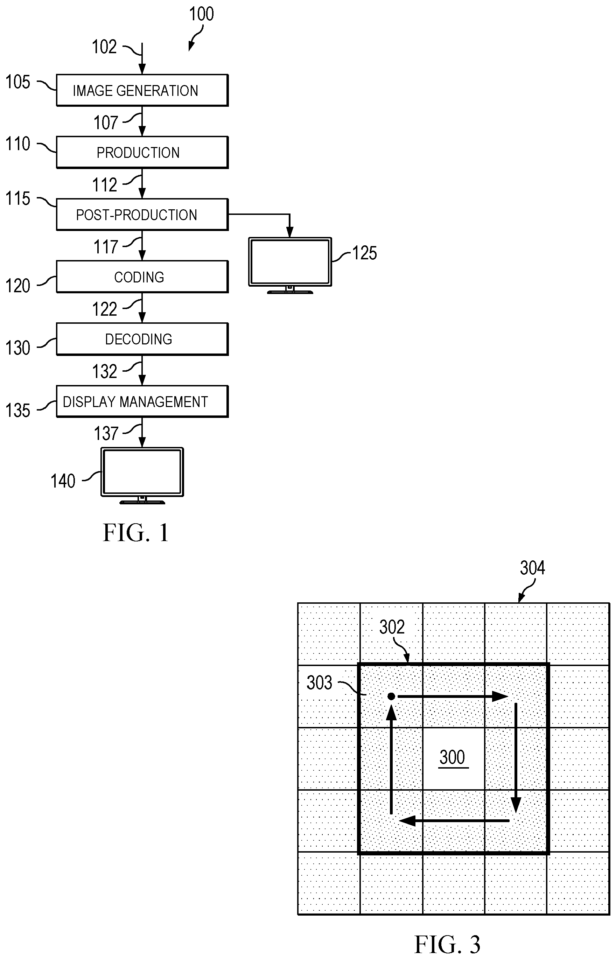

FIG. 1 depicts an example process of a video delivery pipeline (100) showing various stages from video capture to video content display. A sequence of video frames (102) is captured or generated using image generation block (105). Video frames (102) may be digitally captured (e.g. by a digital camera) or generated by a computer (e.g. using computer animation) to provide video data (107). Alternatively, video frames (102) may be captured on film by a film camera. The film is converted to a digital format to provide video data (107). In a production phase (110), video data (107) is edited to provide a video production stream (112).

The video data of production stream (112) is then provided to a processor (or one or more processors such as a central processing unit (CPU)) at block (115) for post-production editing. Block (115) post-production editing may include adjusting or modifying colors or brightness in particular areas of an image to enhance the image quality or achieve a particular appearance for the image in accordance with the video creator's creative intent. This is sometimes called "color timing" or "color grading." Other editing (e.g. scene selection and sequencing, image cropping, addition of computer-generated visual special effects, etc.) may be performed at block (115) to yield a final version (117) of the production for distribution. During post-production editing (115), video images are viewed on a reference display (125).

Following post-production (115), video data of final production (117) may be delivered to encoding block (120) for delivering downstream to decoding and playback devices such as television sets, set-top boxes, movie theaters, and the like. In some embodiments, coding block (120) may include audio and video encoders, such as those defined by ATSC, DVB, DVD, Blu-Ray, and other delivery formats, to generate coded bit stream (122). Methods described herein may be performed by the processor at block (120). In a receiver, the coded bit stream (122) is decoded by decoding unit (130) to generate a decoded signal (132) representing an identical or close approximation of signal (117). The receiver may be attached to a target display (140) which may have completely different characteristics than the reference display (125). In that case, a display management block (135) may be used to map the dynamic range of decoded signal (132) to the characteristics of the target display (140) by generating display-mapped signal (137). Additional methods described herein may be performed by the decoding unit (130) or the display management block (135). Both the decoding unit (130) and the display management block (135) may include their own processor, or may be integrated into a single processing unit.

**Image Segmentation Maps and Preprocessing Operations**

In order to process individual objects inside an image, the location of the pixels that compose a particular object are known. This information is stored in a segmentation map. Using an image's segmentation map, individual objects are extracted from the image and used to generate a graph that characterizes the objects in an image. This graph provides structural information to the iterative process about which objects to visit first and how to process each object inside of an image.

At a local level, each individual pixel in an image is used to characterize an object. At a global level, an image is characterized by the objects that constitute the image. The ability to process images at the object level allows for balanced global and local image enhancement. This balance is achieved by processing objects so that they stand out from their neighbors (global), while also enhancing the interior of these objects (local) for improved visual quality.

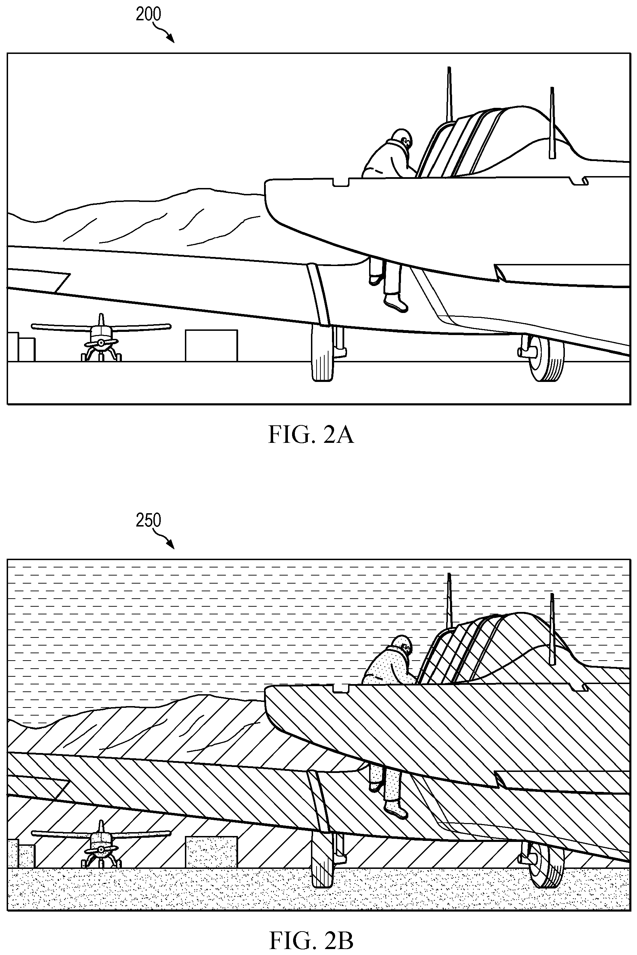

In order to perform processing at the object level, knowledge of which pixels belong to each object in the image is provided as a segmentation map. For an image $I \in \mathbb{R}^{H \times W}$, the segmentation map associated with an image is another

image, $\mathcal{L} \in \mathbb{N}^{H \times W}$, in which each integer pixel value represents a label that corresponds to the object to which it belongs. A sample image-segmentation map pair is provided in FIGS. 2A and 2B. The image (200) is an original image, and the segmentation map (250) is its corresponding segmentation map. In some embodiments, the image (200) is original HDR image. The segmentation map (250) may include labels overlaid on the image (200). The segmentation map (250) may be created by "carving out" the boundaries of an object using rectangular, polyline, polygon, and pixel regions of interest (ROI). For example, let $L$ represent the number of distinct categories of objects in an image. Then, every pixel

$\mathcal{L}(m, n)$ in the output segmentation map will take a value in {0, 1, ..., $L$}. Numbers 1 to $L$ in this set correspond to a unique image category. A value of 0 is assigned to a segmentation map pixel if any pixel in the segmentation map is unassigned. Segmentation maps may also be generated using other tools, such as a deep learning-based image segmentation method.

In some embodiments, generated segmentation maps fail to assign pixels along the boundaries between objects or borders of the image. Such an issue may be corrected by reassigning the value of each zero pixel *(e.g.,* unlabeled pixel) in an image segmentation map with the same value as the closest non-zero pixel value to it. In some implementations, to find the closest non-zero-pixel value to a particular zero-value pixel, a breadth first search (BFS) is employed. A BFS is an algorithm for searching a tree data structure in which each level of the tree is fully explored before moving on to the next level of the tree. Each tree level represents the pixels that are directly border the previous layer of the tree constructed up to that point. The "root" of the tree is the first level to be explored, and is given by the unlabeled pixel to which the algorithm is assigning a label. The second level of the tree is composed of the eight pixels that surround the unlabeled pixel. The third level of the tree is composed of the 16 pixels that surround the second level, and so on. Generating and exploring the tree is executed until the first labeled pixel is encountered. The unlabeled pixel to which the algorithm is trying to assign a label is given this label. In FIG. 3, the root of the tree is provided as unlabeled pixel (300). The unlabeled pixel (300) is surrounded by a second level (302). The second level (302) is surrounded by the third level (304).

The levels of the tree are built and explored using a queue. Every time an unlabeled pixel is encountered during the search, the eight pixels that surround it are checked in clockwise order. In some implementations, the top-left pixel is checked first. Of the neighbors that surround this pixel, the ones that have not been explored are added to the queue. In FIG. 3, the unlabeled pixel (300) has eight neighbors, all of which have not been checked into the queue. Therefore, all pixels of the second level (302) are added to the queue, starting with the top-left pixel (303) in the top-left corner. When the top-left pixel (303) is pulled from the queue to be processed, it is first checked to see if it has a label. If the top-left pixel (303) does have a label, the BFS process is ended, and the unlabeled pixel (300) is assigned this label. Otherwise, all of the neighbors of the top-left pixel (303) that have not been added to the queue are added. In this case, the top-left pixel (303) has eight neighbors, but since three are checked into the queue, only the five pixels in the third level (304) that border the top-left pixel (303) are added to the queue. Since these pixels are added at the end of the queue, they are not explored until the remainder of the second level (302) are explored.

As one particular example, the below pseudocode provides an example for labelling unlabeled pixels. In this pseudocode, *GetUnvisitedNeighbors* returns the list of unvisited neighbors for the current pixel. *QueueFrontElement, QueuePop* and *QueueInsert* are standard queue operations. This process is carried out for every unlabeled pixel in the original segmentation map. Upon termination every pixel in the new segmentation map is assigned a label from 1, ..., *L*. By incorporating this code into a loop, all pixels inside a segmentation map are discovered.

```
Inputs: (ImageLabels: The Object Segmentation Map; col: Column of Unlabeled Pixel; row:
Row of Unlabeled Pixel)
Outputs: (ImageLabels: The New Object Segmentation Map)

Initialize: Queue: Queue used for storing pixels in each level of tree to be explored
            QueueInsert(Queue, row, col)

While Queue Not Empty
        (curr_row, curr_col) = QueueFrontElement(Queue)
        QueuePop(Queue)
        If ImageLabels(curr_row, curr_col) > 0
                ImageLabels(row,col) ← ImageLabels(curr_row, curr_col)
                return
        End
        ListUnvisitedNeighbors = GetUnvisitedNeighbors(curr_row, curr_col)
        For i in ListUnvisitedNeighbors
                (neighbor_row, neighbor_col) = ListUnvisitedNeighbors(i)
                QueueInsert(Queue, neighbor_row, neighbor_col)
        End
End
```

## Hierarchical Graph Generation

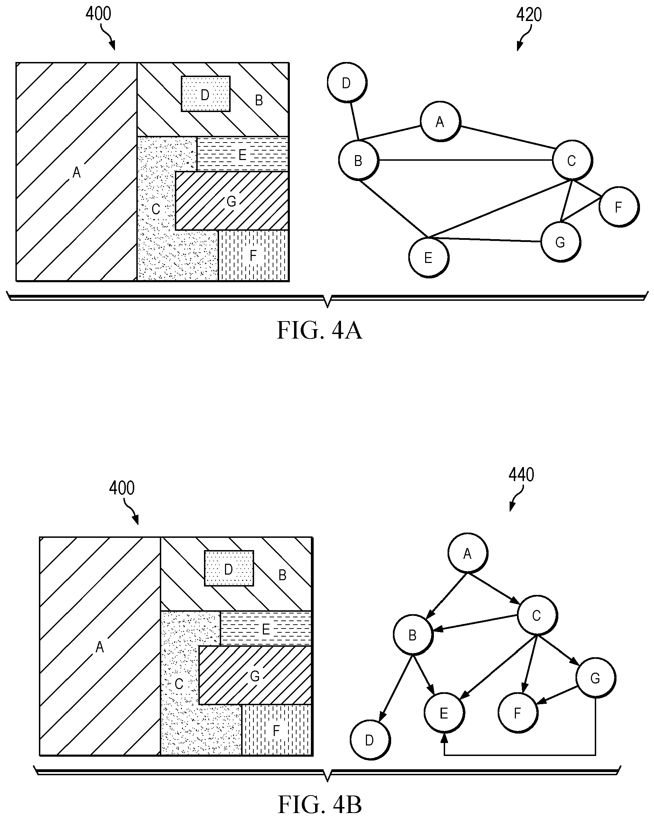

As previously described, images may be composed of several objects. Enhancing certain objects produces a larger image quality improvement than enhancing other, less important objects. Objects that have a larger impact on overall image quality have greater importance than objects that have a lesser impact on overall image quality. Accordingly, in some implementations, objects are ordered and processed based on their importance. Methods described herein capture this hierarchy of object importance using a graph structure, described below with respect to FIGS. 4A-4B. Larger, more important objects are situated closer to the "root node" of the graph structure and are processed first, allowing for more freedom in decision making. Smaller objects are located further away from the root node and are processed later. These constraints enhance objects while maintaining relative luminance and saturation levels between objects. For example, a dark object surrounded by bright objects should not get brighter than its neighbors during enhancement.

FIG. 4A provides an image (400) comprised of a plurality of objects, such as Object A, Object B, Object C, Object D, Object, E, Object F, and Object G. Graph structure (420) includes a plurality of nodes, such as Node A, Node B, Node C, Node D, Node E, Node F, and Node G. Each node represents a respective object. For example, Node A represents Object A, Node B represents Object B, and the like. Each node is connected by an edge. If two nodes share an edge in the graph structure (420), the respective objects in image (400) share a boundary (or border) with each other. The graph structure (420) may also be directed. The direction of the edges in the graph communicates the importance of a node, as shown in graph structure (440) of FIG. 4B. Specifically, consider a graph $G$ that is defined over the pair $(V, E)$, where $V$ is the set of all nodes and $E$ is the set of all directed edges between vertices, $E \subseteq \{(u, v)|u, v \in V\}$, where edge direction of the edge is from $u$ to $v$. Then, the importance of the object associated with node $u$ is more than $v$. The importance of an object is determined by a metric, which can be user defined. In methods described herein, the size of an object is used to determine importance. However, other characteristics of objects may be used to determine importance. For example, the category of an object may be used to determine importance. In such examples, a human may have greater importance in the image than walls or floor, regardless of the size of the background wall. In other embodiments, the connectivity of a node or object with neighboring nodes or objects may also be used to determine importance. For example, a node with a larger number of connected edges may have more significance than a node or object with fewer connected edges. In some embodiments, the importance is based on a combination of described object characteristics.

In the example of FIGS. 4A-4B, Object A is the largest object within the image (400). Larger objects have arrows point out of them towards smaller objects that share a boundary. Accordingly, arrows point from Object A to both Object B and Object C.

As one particular example, the below pseudocode provides an example for generating a graph data structure, such as the graph structure (440). An object boundary map is generated from the segmentation map. The boundary pixels lie on the border between two objects. Visiting each of these boundary pixel locations, their neighborhood is checked in the object segmentation map to determine the connected objects pair. The function *CheckIfDifferentFromNeighborPixels* in the pseudocode finds the connected object pairs from the object boundary map and the segmentation map. The two edges are stored (representing both directions) between these two objects in an adjacency matrix. This generates an undirected adjacency matrix or an undirected graph. The adjacency matrix is then made directed by going through each edge and checking which node connected to the edge is larger based on the size metric. The *CheckLargerMetricValueBetween-Nodes* function in the following pseudocode finds smaller or less important nodes. The edge directed from the smaller to larger node in the adjacency matrix is then removed. The result is a directed adjacency matrix or a directed graph. In some implementations, if the objects share a boundary pixel, then their nodes are connected by an edge. In other implementations, the number of boundary pixels between objects are used instead to avoid weakly connected objects.

```
Inputs: (ImageLabels: The Object Segmentation Map)
Outputs: (G: The Graph)


Initialize: NumObjects: Number of unique values in ImageLabels
            UniqueVals: Unique image labels in ImageLabels
            SizeArray: zeros(sizeof(NumObjects))
            A: Adjacency matrix


For i in NumObjects
        SizeArray(i) ← sizeof(ImageLabels, UniqueVals(i))   (compute the size of object in image)
End


EdgeMap ← edges(ImageLabels)                              (compute edge map from segmentation map)
[M, N] ← findEdgePixelLocations(EdgeMap);        (find coordinate information of each edge pixel)
NumberOfEdgePixels ← length(M)


% Build Undirected Adjacency Matrix
For i in M
        CurrentEdgePixelLoc = [M(i) N(i)]
        YN ← CheckIfDifferentFromNeighborPixels(ImageLabels,CurrentEdgePixelLoc)
        If YN == 1 then
                A ← Add edge between the two objects in two places in adjacency matrix
        End
End


% Make Adjacency Matrix Directed
m ← sizeof(A)                                       (Get dimension of square matrix)
For i in m
        For j in m
                If A(i,j) ~= 0 and A(j,i) ~= 0
                        Val ← CheckLargerMetricValueBetweenNodes(A,i,,j)  (binary output)
                        If Val ==1
                                A(j,i) ← 0
                        Else
                                A(i,j) ← 0
                        End
                End
        End
End
G ← BuildGraph(A)
```

In some implementations, the decision-making process for the order in which objects are processed is implemented using a priority queue. In examples described herein, such a priority queue is based on both the size of the object and the relationship between the object and adjacent objects. The largest object in an image is placed at the top of the queue for priority. Once the largest object is processed, the associated node is removed from the graph. Nodes to which the node associated with the largest object shares a boundary are then examined to determine whether they have any remaining ancestors. If any node does not have a remaining ancestor, then the corresponding objects are larger than the remaining unprocessed nodes that they border. Therefore, these nodes are now placed into the priority queue, positioned according to size. In this manner, larger objects are processed first. All objects processed in a later iteration internalize the enhancements of their ancestors.

As one particular example, the below pseudocode provides an example for using a priority queue. In the pseudocode, the *GetPredecessorsOfCurrentNode* function obtains the ancestors or parents of the current node. On the other hand, the *GetSucessorsOfNode* function obtains the children or successors of the current node. The *AddNodeToQueue* function adds the node to the priority queue based on its importance. The *RemoveFirstNodeInQueue* function obtains the first node in the priority queue.

```
Inputs: (G: The Graph)
Outputs: (Null)

Initializations: NumNodes: Number of nodes in the graph
                 QueueArray: The array that serves as a queue for the nodes in the graph

% Initialize Queue
For i in NumNodes
        Node ← GetCurrentNode(G, i)
        Predecessors ← GetPredecessorsOfCurrentNode(G, Node)
        YN ← CheckIfEmpty(Predecessors)
        If YN == 1
                QueueArray ← AddNodeToQueue(QueueArray, Node)
        End
End

% Traverse Graph and Update Queue
While IsEmpty(Queue) == False
        CurrentNode ← RemoveFirstNodeInQueue(QueueArray)
        ProcessCurrentNode(CurrentNode)
        SucessorNodeArray ← GetSucessorsOfNode(G, CurrentNode)
        QueueArray ← Pop(QueueArray, CurrentNode)
        For i in SucessorNodeArray
                SucessorNode ← SucessorNodeArray(i)
                Predecessors ← GetPredecessorsOfCurrentNode(G, SucessorNode)
                YN ← CheckIfEmpty(Predecessors)
                If YN == 1
                        QueueArray ← AddNodeToQueue(QueueArray, Node)
                End
        End
End
```

In some implementations, attributes used for processing an object is stored inside its corresponding node. This provides for precomputing many quantities used during processing. Such information includes the size of the object, a list of ancestors of the object, a mean of pixel intensities that form the object, an object label, an object luminance histogram, and an object saturation histogram. The list of ancestors of the object includes a list of all nodes that share an edge with the current node and the direction of the edge pointing towards the current node. The object label includes the segmentation map label corresponding to the current node. The object luminance histogram describes the luminance of the object. The object saturation histogram describes the saturation of the object.

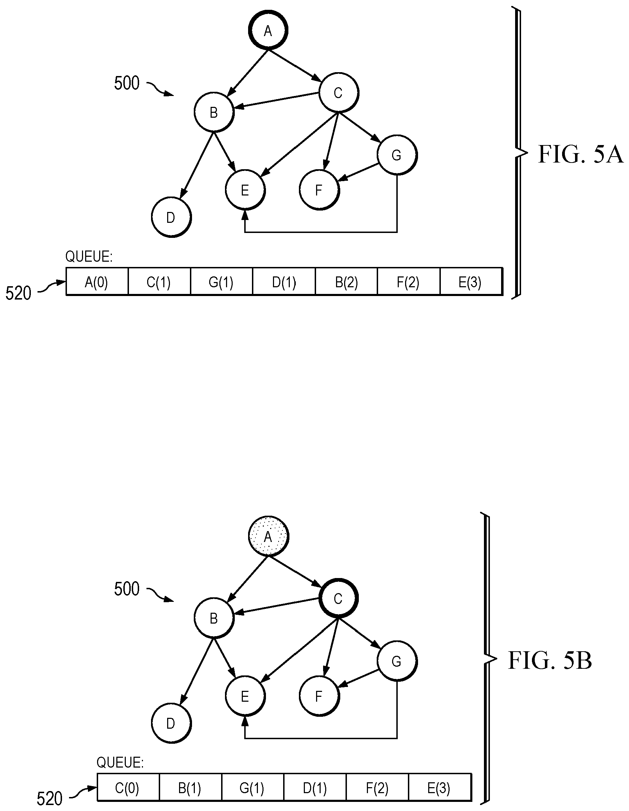

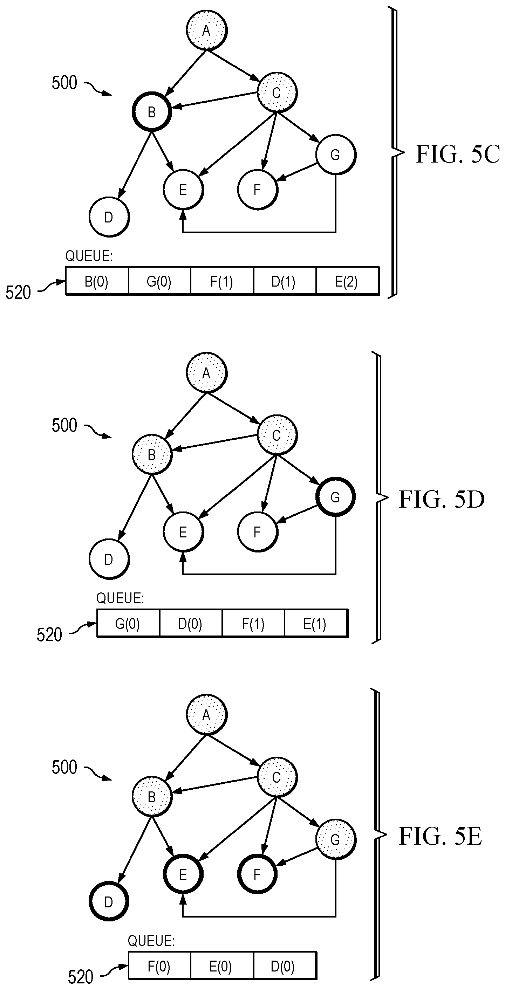

FIGS. 5A-5E illustrate an example process for traversing the priority queue. Nodes A-G illustrated within FIGS. 5A-5E correspond with Nodes A-G shown in FIGS. 4A-4B. The Nodes A-G in FIGS. 5A-5E form a graph structure (500). The graph structure (500) may correspond to the graph structure (440) of FIG. 4B. A priority queue (520) illustrates the priority of the Nodes A-G for processing. The priority queue (520) also includes parentheses next to the node label indicative of the number of parents for that node. The priority queue (520) is ordered according to number of parents. When an object is processed, the corresponding node is removed from the priority queue (520). The number of parents for all its children is decremented by one. The priority queue is then reordered by the updated number of parents.

In FIG. 5A, Node A has no parents. Node A is processed and removed from the priority queue (520).

In FIG. 5B, as Node A has been removed, the priority queue (520) is updated. Node C has no remaining parents and is processed and removed from the priority queue (520).

In FIG. 5C, as Node C has been removed, the priority queue (520) is updated and reordered. Both Node B and Node G have no remaining parents and may be processed. Node B is processed and removed from the priority queue (520) first, as the Object B is larger than the Object G.

In FIG. 5D, as Node B has been removed, the priority queue (520) is updated and reordered. Both Node G and Node D have no remaining parents and may be processed. Node G is processed and removed from the priority queue (520) first, as the Object G is larger than the Object D.

In FIG. 5C, as Node G has been removed, the priority queue is updated and reordered. Node D, Node E, and Node F all have no remaining parent, and may be processed. Node F is processed first, as Object F is the largest remaining object. Node E is processed next, as Object E is larger than Object D. Object D is processed last.

Following construction of the graph structure (500), each node is visited, and each object is processed using a three-stage enhancement process, described in more detail below. After each node in the graph structure (500) is processed once, the image quality is checked, and a second round of enhancements is initiated if a stopping criterion is not fulfilled. This process continues until convergence.

**Iterative Enhancement Process**

SDR image conversion to HDR images, or additional enhancement of existing HDR images, may be achieved at the object level using a graph-based iterative process. The iterative approach avoids highlight clipping or crushing of details in low intensity areas that may be experienced in known up-conversion methods by making incremental changes.

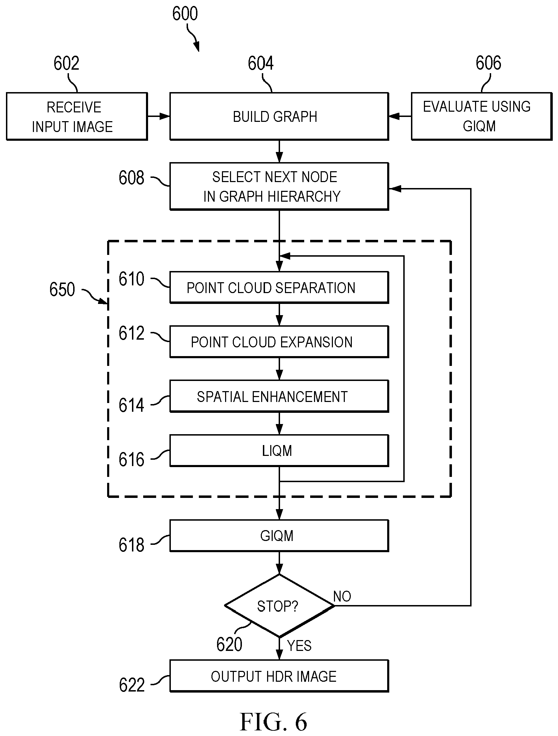

FIG. 6 illustrates a method (600) for an iterative image enhancement process. The method (600) may be performed by the central processing unit at block (115) for post-production editing. In some embodiments, the method (600) is performed by an encoder at encoding block (120). In other embodiments, the method (600) is performed by the decoding unit (130), the display management block (135), or a combination thereof. At block (602), the method (600) includes receiving an input image, such as an SDR image or an HDR image. The input image may be in received in the RGB color domain or the YCbCr color domain. In some implementations, when the input image is in the RGB color domain, the method (600) includes converting the input image to the YCbCr color domain.

At block (604), the method (600) includes building a graph structure based on the input image, such as graph structure (440), as described above. In some implementations, the graph structure is built using a segmentation map associated with the input image. At block (606), the method (600) includes evaluating the quality of input image using a global image quality metric (GIQM).

At block (608), the method (600) includes selecting the next node in the graph hierarchy. For example, the next node in the priority queue (520) is selected. At process (650), the method (600) includes performing an iterative enhancement process. This process is performed on each object within the graph structure. Processing is performed in three primary modules: (1) point cloud separation at block (610), (2) point cloud expansion at block (612), and (3) spatial enhancement at block (614). Point cloud separation accounts for inter-object enhancement, while point cloud expansion and spatial enhancement account for intra-object enhancement. At block (616), the method includes using a lightweight local image quality metric (LIQM) to monitor the quality of the enhanced objects as the iterative process progresses.

When the last object in the image has been processed, at block (618), the method (600) includes evaluating the GIQM to evaluate the objective quality of the entire image after the changes made in the current iteration. If the image quality has improved, a new iteration is initiated for processing the image that has been output from the current iteration (at block 620). If, at block (620), the stopping criterion is met in the current iteration, the method (600) exits the iterative process and the highest quality enhanced image up to that iteration is output as an HDR image at block (622). In some implementations, the method (600) includes converting the HDR image to the RGB domain.

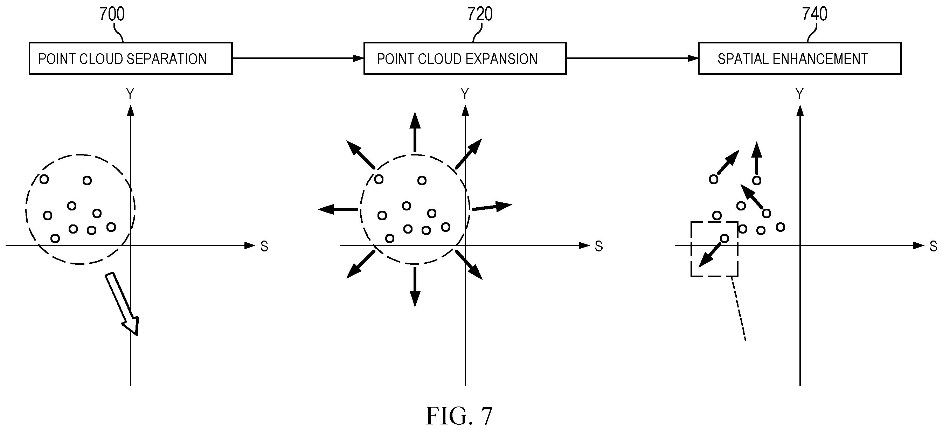

Returning to the iterative enhancement process described by process (650), FIG. 7 illustrates an example point cloud separation process (700), an example point cloud expansion process (720), and an example spatial enhancement process (740). In each process, the y-axis is representative of luminance, and the x-axis is representative of saturation. Point cloud separation is a form of inter-object enhancement in which processing is done between objects, rather than inside each object. Point cloud separation separates the luminance-saturation point clouds for objects from each other, so that, objects stand out more from each other in the final image. Point cloud expansion and spatial enhancement are forms of intra-object enhancement and are performed to enhance the pixels within a particular object. Point cloud expansion increases the spread of pixels within a particular object, so that within-object pixel values stand out from and cover a greater luminance-saturation range. Spatial enhancement increases the details in each object so that high frequency information, such as edges and texture, appear more "crisp" and are easily recognizable by a viewer of the image.

The three-stage enhancement process of process (650) relies on the properties of an object and its relationships with its neighbors (obtained from the graph structure) to decide on improvements of the current object. The order of processing the neighbors influences enhancements to be performed on the current object. These complex interactions between objects are difficult to capture in a one-shot optimization framework. To resolve these complexities, the iterative enhancement process makes incremental changes to the objects within an image at each iteration. As all objects are moving incrementally in each iteration, the algorithm makes informed decisions on enhancing the current object by taking the latest information from neighbors, striking a balance between inter- and -intra-object enhancement techniques.

Notation used in the iterative process is described as follows. Define $I_{RGB} \in \mathbb{R}^{H \times W \times 3}$ to be an RGB image of size $H \times W$ and $I_{YCbCr} \in \mathbb{R}^{H \times W \times 3}$ to be the same image after conversion to the YCbCr domain. Define $Y$, $C_b$, and $C_r$ as the first, second, and third components along the third dimension of $I_{YCbCr}$. Then, $Y$ is the luminance component of the original image and the saturation component is given by $S = \sqrt{C_b^2 + C_r^2}$. Suppose there are N objects in an image, *Object* 1,..., *Object N*, and without loss of generality, assume that they are processed in ascending numerical order during the iterative process. Define $Y_k$ and $S_k$ to represent the $k^{th}$ object's luminance and saturation component arrays. The $l^{th}$ pixel value inside the luminance component of *Object k* is denoted by $p_{k,l}$. Furthermore, let $m_k = mean(Y_k)$ represent the $k^{th}$ object's mean luminance. In the graph structure, objects have descendants/children (nodes to which they point) and ancestors/parents (nodes that point towards them). Define $m_{A_k}$ and $m_{D_k}$ to be the luminance means of *Object k's* ancestors and descendants, respectively. The current iteration of a particular value will be signified using a superscript. For example, $r_1^{(i)}$ is a learning rate used in the $i^{th}$ iteration.

Certain values vary from between each module in an iteration. These include $Y_k$, $S_k$, $p_{k,l}$, $m_k$, $m_{A_k}$, and $m_{D_k}$. To distinguish these values between modules, dots are placed overtop of them. A single dot over a value signals that point cloud separation has been applied; a double dot over a value signals that point cloud expansion has been applied; a triple dot over a value signals spatial enhancement has been applied; and no dots over a value signals completion of the entire iteration. For example, $\dot{m}_k^{(i)}$ represents the mean of *Object k's* luminance component in iteration i after point cloud separation has been applied to it.

For ease of reference, an extended list of this notation is provided in Table 1:

Table 1: Notation used in the Iterative Process

| Notation | |
|---|---|
| Attribute | Description |
| Set Notation | |
| $\mathbb{R}$ | Set of real numbers |
| $A_k$ | Set of all ancestor arrays of $k^{th}$ object |
| $D_k$ | Set of all descendant arrays of $k^{th}$ object |
| Image-related properties | |
| $I_{RGB}$ | Image in RGB color space |
| $I_{YCbCr}$ | Image in YCbCr color space |
| $Y$ | Luminance component image |
| $C_b$ | First chrominance component image |
| $C_r$ | Second chrominance component image |
| $S$ | Saturation component image |
| $N_k$ | Dimension (in pixels) of the smallest square into which the $k^{th}$ object fits |
| $\underline{I}_{Y,k}$ | The $N_k \times N_k$ square segmented luminance image containing the $k^{th}$ object |
| $Y_k$ | $k^{th}$ object's luminance component array |
| $S_k$ | $k^{th}$ object's saturation component array |
| $m_k$ | $k^{th}$ object's mean luminance |
| $m_{A_k}$ | luminance mean of $k^{th}$ object's ancestors |
| $m_{D_k}$ | luminance mean of $k^{th}$ object's descendants |
| $p_{k,l}$ | $l^{th}$ pixel value inside the luminance component of *Object k* |

(continued)

| Image-related properties | |
|---|---|
| $r$ | Learning rate |
| | |
| Function Notation | |
| $\psi$ | Sigmoid function |
| *Grad*() | Gradient Function |
| Operations | |
| $\boldsymbol{T} \odot \boldsymbol{U}$ | Pointwise multiplication between arrays $\boldsymbol{T}$ and $\boldsymbol{U}$ |
| $\boldsymbol{T} \oplus u$ | Adding scalar u to every element of array $\boldsymbol{T}$ |
| $|A|$ | Number of pixels comprising the object in set $A$ |
| *SADCT*() | Shape Adaptive DCT Transform |
| *ISADCT*() | Inverse Shape Adaptive DCT Transform |
| Miscellaneous | |
| **Bold face** | Indicates that a variable is an array |
| Superscript (e.g. $r_1^{(i)}$) | Iteration number |
| Dot notation pertaining to $\boldsymbol{Y_k}$, $\boldsymbol{S_k}$, $p_{k,l}$, $m_k$, $m_{A_k}$, and $m_{D_k}$ | |
| No dots (e.g. $m_k$) | Value at the end of an iteration |
| Single dot (e.g. $\dot{m}_k$) | Value after point cloud separation |
| Double dot (e.g. $\ddot{m}_k$) | Value after point cloud expansion |
| Triple dot (e.g. $\dddot{m}_k$) | Value after spatial enhancement |

**Inter-Object Point Cloud Separation**

Phone displays are much smaller than television screens and computer monitors. While performing detail enhancement on images can lead to a visual quality improvement on larger displays, these benefits are not always fully realized on a phone screen, as the small size subdues the enhancements. Use of inter-object contrast leads to a perceptible visual quality difference on smaller screens and is achieved via point cloud separation in the YCbCr color domain (where luminance and saturation are easily adjusted).

Using the previously described notation, the $k^{th}$ object's luminance is updated after point cloud separation in iteration i using the following equation:

$$\dot{\boldsymbol{Y}}_{\boldsymbol{k}}^{(i)} = \boldsymbol{Y}_{\boldsymbol{k}}^{(i-1)} \oplus r_1^{(i)} \Delta_{y_k}^{(i)}. \qquad \text{[Equation 1]}$$

where the notation $\oplus$ is used to represent the addition of a scalar, $r_1^{(i)} \Delta_{y_k}^{(i)}$, to every element of $k^{th}$ object's luminance.

In Equation 1, $r_1$ represents a learning rate, which may be adjusted in each iteration to ensure that the value of the image quality metric (GIQM) is improving at each iteration. In examples provided herein, images were generated using $r_1^{(0)} = 0.2$. The symbol $\Delta_k^{(i)}$ is the total luminance displacement for the $k^{th}$ object prior to applying the learning rate. The displacement $\Delta_k^{(i)}$ is obtained according to the following equation:

$$\Delta_k^{(i)} = \psi_b \left( m_k^{(i-1)}, \dot{m}_{A_k}^{(i)} \right) - m_k^{(i-1)}. \qquad \text{[Equation 2]}$$

In Equation 2, $\psi_b$ is a modulated sigmoid curve that is used to shift the input mean of the current object to a new mean. $\dot{m}_{A_k}^{(i)}$ is the average of the luminance components of the ancestors of *Object k,* which have already undergone point cloud separation in the current iteration. $\psi_b$ is based on the following equation:

$$\psi_b(x,d) = \begin{cases} \left\{ (N-d) * \dfrac{\left(\frac{1}{1+\exp(E)}\right)-\frac{1}{2}}{\left(\frac{1}{1+\exp(b)}\right)-\frac{1}{2}} \right\} + d, & x \geq 2^{\beta-1} \\ \left\{ d * \dfrac{\left(\frac{1}{1+\exp(E\prime)}\right)-\frac{1}{2}}{\left(\frac{1}{1+\exp(b)}\right)-\frac{1}{2}} \right\} + d, & x < 2^{\beta-1} \end{cases} \qquad \text{[Equation 3]}$$

where

$$E = b * \frac{x-d}{2^\beta - d}$$

$$\qquad \text{[Equation 4]}$$

$$E' = b * \frac{x-d}{d}$$

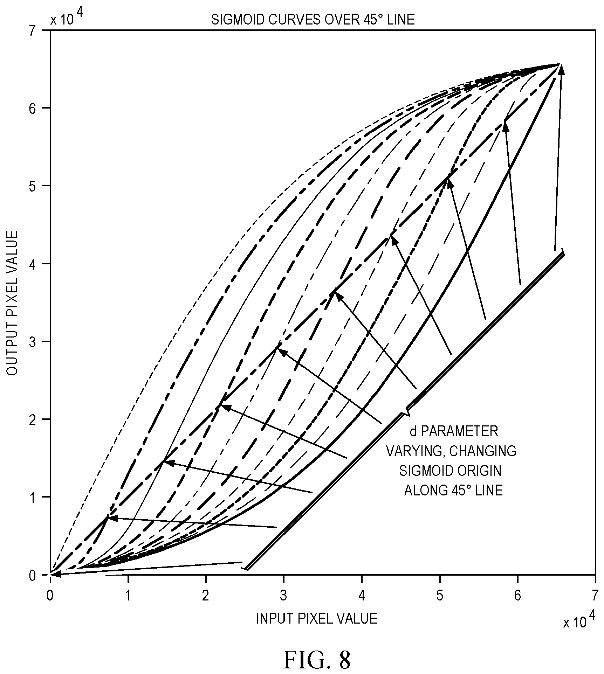

Equation 3 defines a sigmoid curve centered along the 45° line that passes through the origin. The left tail of the curve passes through the point (0,0) and the right tail passes through the point $(2^{\beta-1}, 2^{\beta-1})$. $\beta$ is a constant that specifies the bit-depth of the image, which is 16 for HDR images. The parameter d is used for centering the sigmoid curve along the 45° line. The parameter *x* is used to specify the input pixel value from 0 to $2^{\beta-1}$ for which the sigmoid curve produces an output. The parameter b is a hyperparameter that modifies the slope of the sigmoid curve as it crosses the 45º line. In examples provided herein, b is set to -2. The slope of this curve is higher in the mid tones and gradually taper towards the bright or dark intensity regions. FIG. 8 illustrates a plurality of these sigmoid curves centered at different points on the 45° line.

In Equation (2), $\dot{m}_{A_k}^{(i)}$ is used to determine the center of the sigmoid curve on a 45º line. To improve the amount of contrast between objects that surround each other in an image, $\dot{m}_{A_k}^{(i)}$ should be calculated so that the sigmoid curve is center in a position in which it shifts *Object k* in the direction that increases its contrast with respect to its neighbors. Moreover, because larger objects are considered the most important objects in an image, increasing the $k^{th}$ object's contrast with respect to larger neighboring objects is more important than increasing its contrast with respect to smaller neighbors. Therefore, $\dot{m}_{A_k}^{(i)}$ is defined as in the below Equation (5). Since larger objects contain more pixels, they dominate the value of $\dot{m}_{A_k}^{(i)}$. The $l^{th}$ pixel value inside the luminance component of *Object j* is denoted by $p_{j,l}$.

$$\dot{m}_{A_k}^{(i)} = \frac{1}{\sum_{j \in A_k} |Y_j|} \sum_{j \in A_k} \sum_{l=1}^{|Y_j|} \dot{p}_{j,l} \qquad \text{[Equation 5]}$$

When an object is associated with a root node in a graph structure, as previously described, it has no ancestors. Regardless, it is important that the shift applied to it increases the separation from it and other objects that surround it to ensure it stands out in the image.

Therefore, to perform operations for the root node, *Object* 1 (or Object A in FIG. 4A), $\dot{m}_{D_k}^{(i)}$ is used in place of $\dot{m}_{A_k}^{(i)}$:

$$\dot{m}_{D_k}^{(i)} = \frac{1}{\sum_{j \in D_k} |Y_j|} \sum_{j \in D_k} \sum_{l=1}^{|Y_j|} \dot{p}_{j,l} \qquad \text{[Equation 6]}$$

For ease of notation, $\dot{m}_{A_k}^{(i)}$ is used in all equations and figures described herein, but it should be noted that $\dot{m}_{D_k}^{(i)}$ is used in its place for the root node.

The sigmoid curve is incorporated into the point cloud separation operation because it shifts apart objects more that are closer in luminance. The sigmoid curve function ramps down as it approaches far enough distance from the center. Therefore, the objects that already have sufficient contrast with their neighbors are shifted less. Thus, neighboring objects having less contrast are pushed further away from each other, while objects that are separated sufficiently are pushed apart less.

Processing saturation independently from luminance may result in unnatural, overly saturated images. When luminance of an object is increased such that it becomes brighter, the object may begin to appear "washed out". Conversely, when a bright object becomes darker, the blinding effect of the brightness is lost, and the object appears more colorful. Based on this relationship between luminance and saturation, Equation 7 is used to update the saturation component of *Object k* in iteration i once its luminance component has been updated:

$$\dot{S}_k^{(i)} = \sqrt{\frac{Y_k^i}{Y_k^{i-1}}} S_k^{(i-1)}. \qquad \text{[Equation 7]}$$

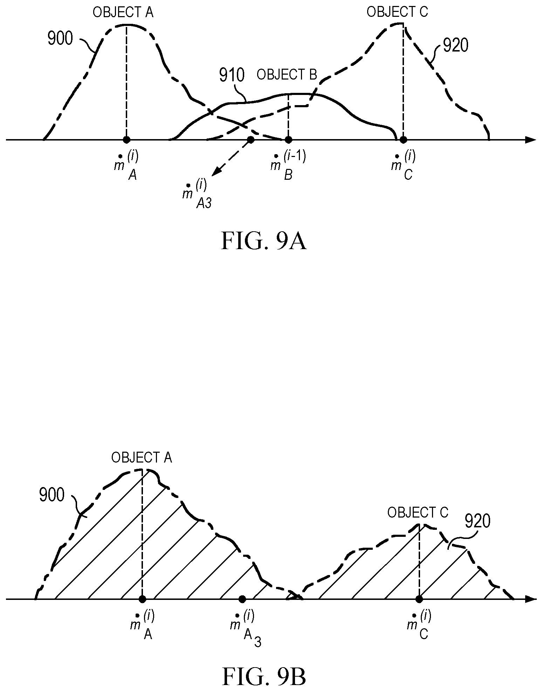

FIGS. 9A-9C illustrate the point cloud separation operation in the $i^{th}$ iteration. First object (900) and second object (910) share boundaries with third object (920) in the image, and thus edges in a respective graph structure. Moreover, the first object (900) and the second object (910) are the larger ancestors of the third object (920). As a result, the third object (920) is shifted according to its ancestors' luminance histograms. The mean of the combined histograms of the first object (900) and the second object (910) is taken to determine the center of the sigmoid curve, $m_{A_3}^{(i)}$. Hence, the output of the sigmoid curve is given by $\psi_b\left(m_C^{(i-1)}, \dot{m}_{A_3}^{(i)}\right)$, which is then used to update Equation (2) and Equation (1).

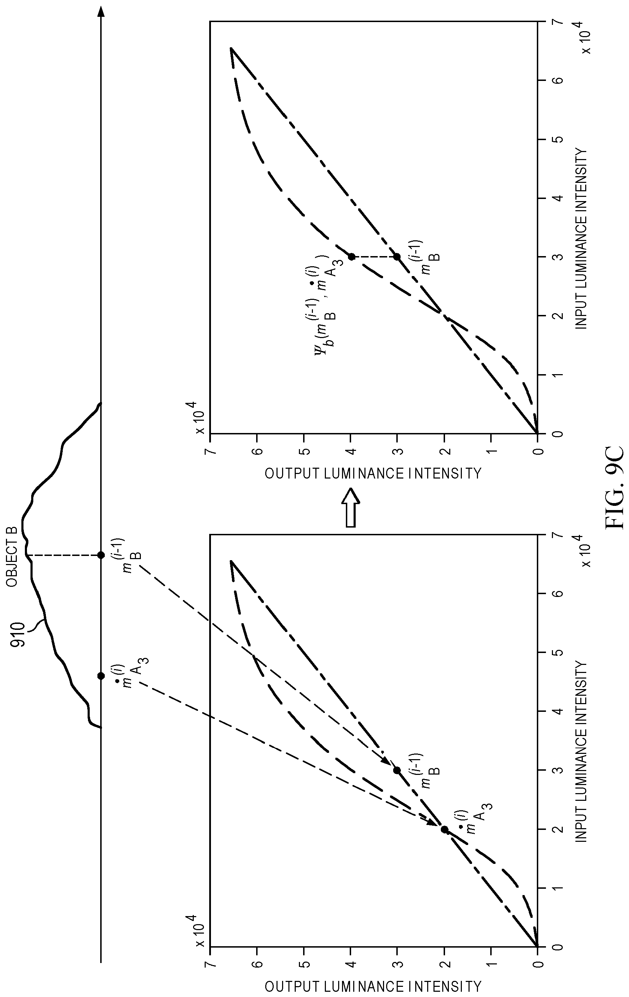

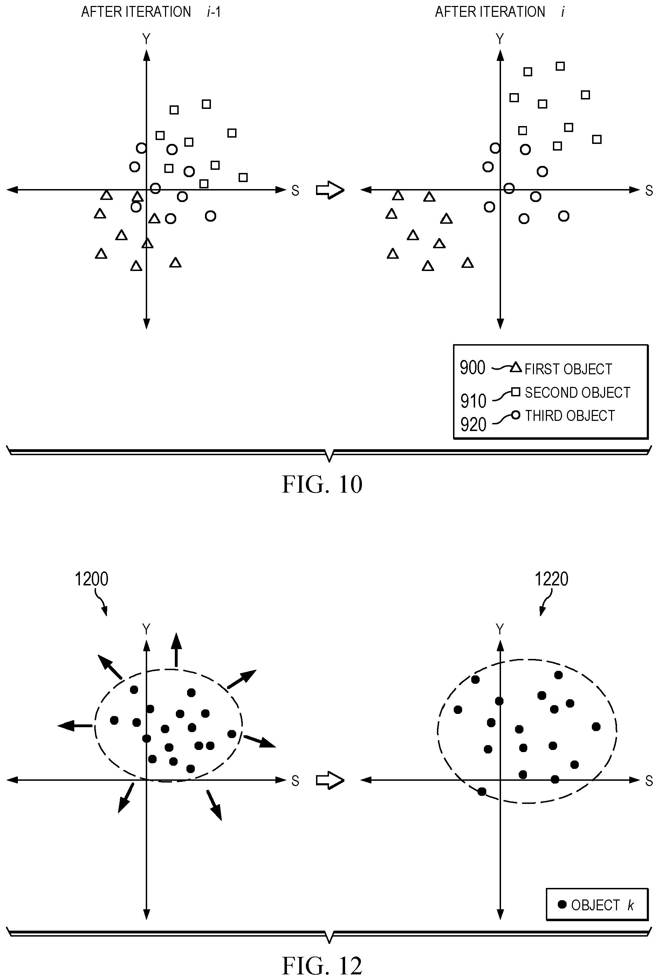

In FIG. 9A, the point cloud separation operation includes obtaining the mean luminance of first object (900) $\dot{m}_A^{(i)}$, the mean luminance of the second object (910) $\dot{m}_B^{(i)}$, and the mean luminance of the third object (920) $m_C^{(i-1)}$. In FIG. 9B, the point cloud separation operation includes obtaining $\dot{m}_{A_3}^{(i)}$ from the histograms of the first object (900) and the second object (910). In FIG. 9C, the point cloud separation operation includes using $\dot{m}_{A_3}^{(i)}$ and $m_C^{(i-1)}$ as inputs to the sigmoid curve $\psi_b$ to compute $\Delta_k^{(i)}$. FIG. 10 illustrates the change in luminance and saturation values of the first object (900), the second object (910), and the third object (920) from iteration i-1 to iteration i.

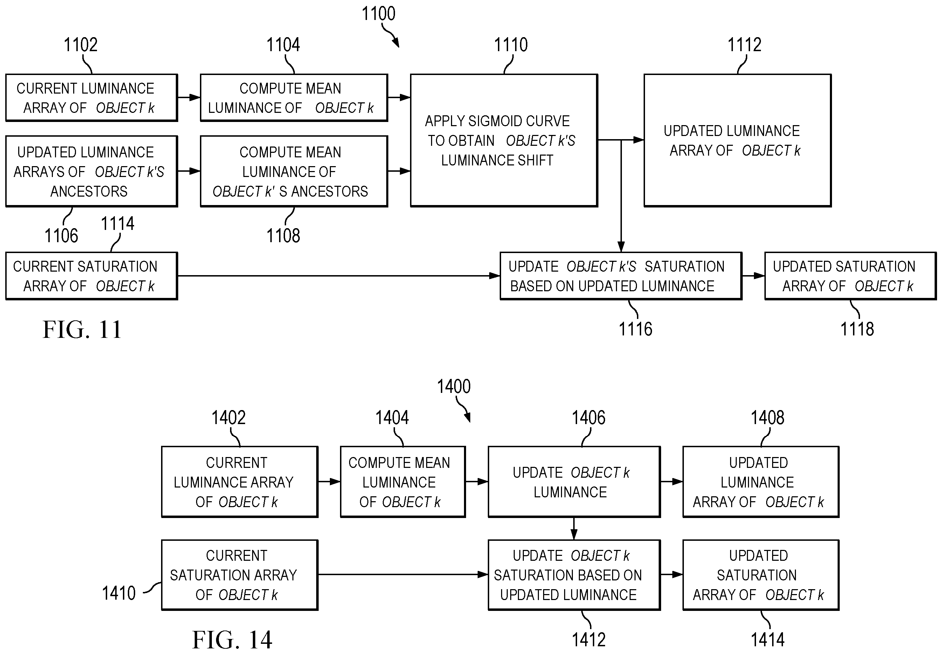

FIG. 11 illustrates a method (1100) for an inter-object point cloud separation operation on an *Object k*. *Object k* may be any object identified within the input image. At block (1102), the method (1100) includes receiving a current luminance array of the *Object k*. At block (1104), the method (1100) includes computing the mean luminance of *Object k* based on the luminance array of *Object k*. At block (1106), the method (1100) includes receiving updated luminance arrays of the ancestors of *Object k*. At block (1108), the method (1100) includes computing the mean luminance of the ancestors of *Object k* based on the luminance arrays of the ancestors of *Object k*. At block (1110), the method (1100) includes applying the sigmoid curve to obtain the luminance shift of *Object k*. The sigmoid curve is based on, for example, the mean luminance of *Object k* and the mean luminance of the ancestors of *Object k*. At block (1112), the luminance array of *Object k* is updated based on the obtained luminance shift. The updated luminance array may then be provided for additional iterations of the inter-object point cloud separation as the current luminance array in block (1102).

At block (1114), the method (1100) includes receiving a current saturation array of the *Object k*. At block (1116), the method (1100) includes updating the saturation of *Object k* based on the current saturation array and the obtained luminance shift of *Object k*. At block (1118), the method (1100) includes updating the saturation array of *Object k* based on the updated saturation values.

**Intra-Object Point Cloud Expansion**

The inter-object point cloud separation operation moves objects based on their luminance and saturation, so that they stand out from each other in the output image. While this leads to improvement in the overall visual quality in the output images, further local or pixelwise enhancement is required to realize the full potential of the iterative module. Inter-object point cloud separation may cause objects to be brighter and more saturated, or darker and less saturated. This causes pixels within an image to look "washed out" as the original contrast is visibly lost. To offset this possibility, an intra-object point cloud expansion operation is incorporated. The intra-object point cloud expansion operation increases the contrast within an object by increasing the spread of the luminance and chrominance values of the pixels of the image.

Recall that $\dot{p}_{k,l}^{(i)}$ represents the $k^{th}$ pixel of *Object k* in iteration i after point cloud separation has been applied.

The below equation provides the formula used to update the pixels in the $k^{th}$ object's point cloud during point cloud expansion:

$$\ddot{p}_{k,l}^{(i)} = \left(1 + r_2^{(i)} f\left(\dot{p}_{k,l}^{(i)}\right)\right) * \left(\dot{p}_{k,l}^{(i)} - \dot{m}_k^{(i)}\right) + \dot{m}_k^{(i)}$$

$$= \dot{p}_{k,l}^{(i)} + r_2^{(i)} f\left(\dot{p}_{k,l}^{(i)}\right) * \left(\dot{p}_{k,l}^{(i)} - \dot{m}_k^{(i)}\right)$$

[Equation 8]

In Equation (8), $r_2^{(i)}$ represents a learning rate, which may be adjusted in each iteration to ensure that the value of the image quality metric (GIQM) is improving. $f$ is a function that can take on a variety of forms. For example, in some implementations, $f\left(\dot{p}_{k,l}^{(i)}\right)$ is a constant value, which would lead to uniform expansion of the pixel values. In other implementations, $f\left(\dot{p}_{k,l}^{(i)}\right)$ is a sigmoid curve, which would lead to an increased rate of expansion for pixels closer to the mean and a tapered rate of expansion for pixels that are already far from it. Examples described herein use the formula specified in Equation (9) to perform point cloud expansion:

$$\ddot{p}_{k,l}^{(i)} = \left(1 + r_2^{(i)}\right) * \left(\dot{p}_{k,l}^{(i)} - \dot{m}_k^{(i)}\right) + \dot{m}_k^{(i)}.$$

[Equation 9]

Because luminance and saturation share a relationship, their dependence may be considered during the intra-object point cloud expansion operation. Thus, the saturation component of *Object k* may be updated according to the equation:

$$\ddot{S}_k^{(i)} = \sqrt{\frac{\ddot{Y}_k^{(i)}}{\dot{Y}_k^{(i)}}} \dot{S}_k^{(i)}.$$

[Equation 10]

In Equation (9), the luminance pixel values of *Object k* spread out from the mean of its luminance component. Because the saturation pixel values of *Object k* are updated according to the enhancements made to the luminance component, they also spread out in a similar manner. As a result, the pixels in the luminance-saturation point cloud spread about the centroid of the point cloud, allowing the contrast inside the object to be improved.

FIG. 12 illustrates a plurality of pixels forming an *Object k* and undergoing an intra-object point cloud expansion operation. A first graph (1200) illustrates the luminance and saturation values of the plurality of pixels prior to the intra-object point cloud expansion operation. A second graph (1220) illustrates the luminance and saturation values of the plurality of pixels after the intra-object point cloud expansion operation.

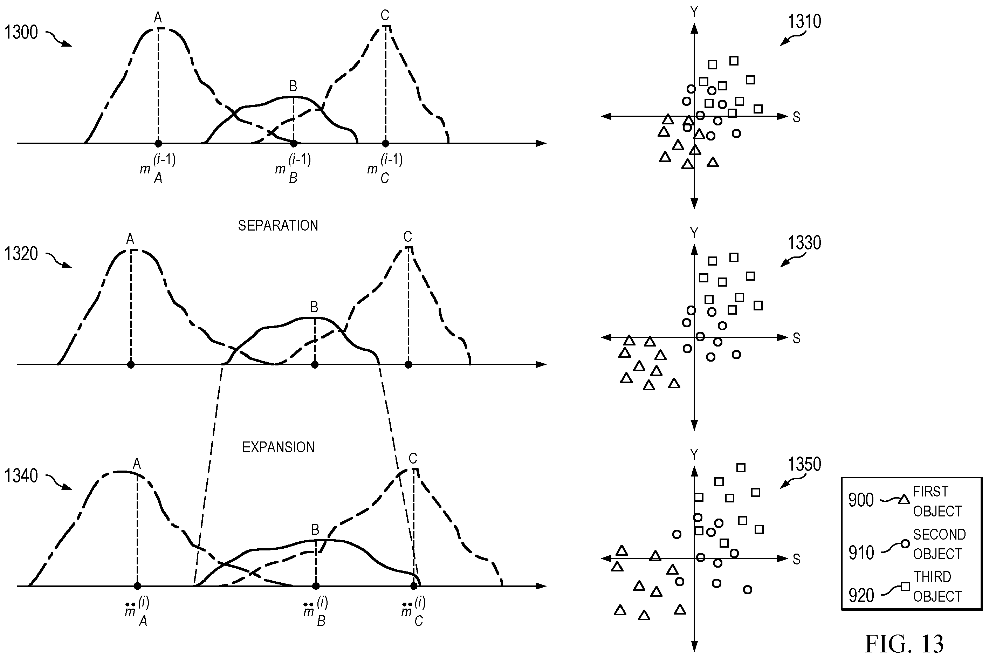

FIG. 13 illustrates a plurality of objects forming an image and undergoing both an inter-object point cloud separation operation and an intra-object point cloud expansion operation. The objects may be, for example, the first object (900), the second object (910), and the third object (920) from FIGS. 9A-9C. First luminance histogram graph (1300) illustrates luminance histograms of the first object (900), the second object (910), and the third object (920) before processing begins. First luminance-saturation graph (1310) illustrates the respective luminance and saturation values of pixels within the first object (900), the second object (910), and the third object (920).

Second luminance histogram graph (1320) illustrates luminance histograms of the first object (900), the second object (910), and the third object (920) after undergoing an inter-object point cloud separation operation. Second luminance-saturation graph (1330) illustrates the respective luminance and saturation values of pixels within the first object (900), the second object (910), and the third object (920) following the inter-object point cloud separation operation. As shown between the first luminance histogram graph (1300) and the second luminance histogram graph (1320), the mean luminance of each object may change due to the inter-object point cloud separation operation.

Third luminance histogram graph (1340) illustrates luminance histograms of the first object (900), the second object (910), and the third object (920) after undergoing an intra-object point cloud expansion operation. Third luminance-saturation graph (1350) illustrates the respective luminance and saturation values of pixels within the first object (900), the second object (910), and the third object (920) following the intra-object point cloud expansion operation. As shown between the second luminance histogram graph (1320) and the third luminance histogram graph (1340), the mean luminance of each object may remain the same following the intra-object point cloud expansion operation. Additionally, the range of luminance and saturation for each object increases due to the intra-object point cloud expansion operation.

FIG. 14 illustrates a method (1400) for an intra-object point cloud expansion operation on an *Object k. Object k* may be any object identified within the input image. At block (1402), the method (1400) includes receiving a current luminance array of the *Object k.* At block (1404), the method (1400) includes computing the mean luminance of *Object k* based on the luminance array of *Object k.* At block (1406), the method (1400) includes updating the luminance of *Object k* according to Equation (7). At block (1408), the method (1400) includes updating the luminance array of *Object k* based on the result of Equation (7). The updated luminance array may then be provided for additional iterations of the inter-object point cloud separation as the current luminance array in block (1402).

At block (1410), the method (1400) includes receiving a current saturation array of the *Object k.* At block (1412), the method (1400) includes updating the saturation of *Object k* based on the current saturation array and the updated luminance of *Object k.* At block (1414), the method (1400) includes updating the saturation array of *Object k* based on the updated saturation values.

## Intra-Object Spatial Enhancement

Inter-object point cluster separation and intra-object point cloud expansion provide the benefit of improving the contrast between and within objects. While this leads to improved visual quality in enhanced images, further improvements may be obtained by using the spatial information within an object during processing to bring out detailed contrast within the object. In examples described herein, a shape adaptive discrete cosine transform (SA-DCT) is used for intra-object spatial enhancement. In each iteration of the process (650), the SA-DCT is applied to a particular object being enhanced. DCT coefficients are then modulated according to a weighting function before an inverse shape adaptive discrete cosine transform (ISA-DCT) is taken. While this SA-DCT algorithm is adopted for intra-object spatial enhancement, it should be noted that processing the frequency coefficients of objects in other domains using, for example, wavelet or Fourier transforms is also possible. Furthermore, spatially-based image sharpening tools, such as unsharp masking, may also be utilized in place of the SA-DCT.

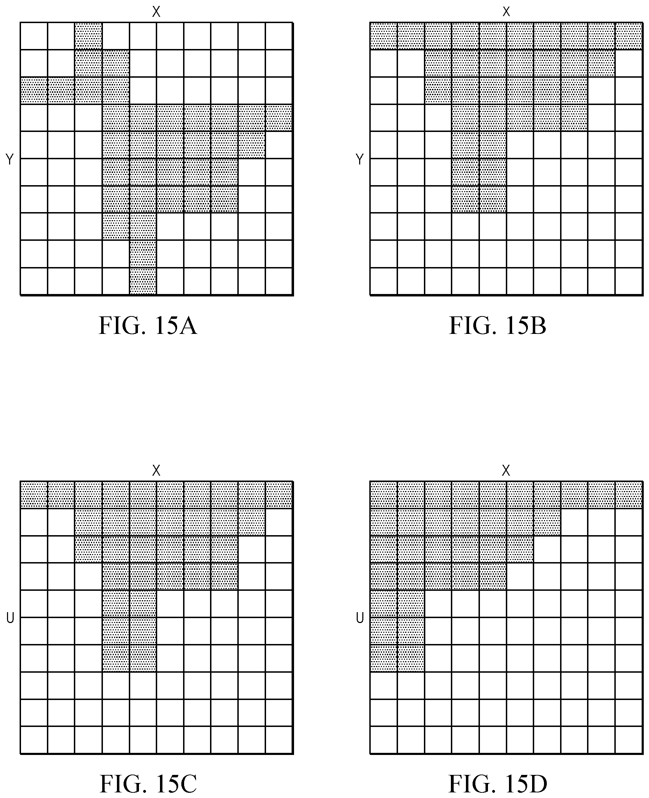

FIGS. 15A-15E illustrate the implementation of a SA-DCT of the luminance component of an object. Let $\underline{l}_{Y,k}$ be the segmentation of an arbitrary $k^{th}$ object from the smallest square into which the object fits inside the image. An example of segmentation of a $k^{th}$ object is shown in FIG. 15A. Let $\underline{l}_{Y,k}'$ be the result of shifting all pixels in this object vertically towards the top of the square, illustrated in FIG. 15B. The dimension of this square is given by $N_k \times N_k$. Define a size $N_k$ DCT transform matrix as:

$$DCT_{N_k}(g,h) = c_0 * \cos\left[g\left(h + \tfrac{1}{2}\right) * \tfrac{\pi}{N_k}\right]; \; g, h = 0, \dots, N - 1 \qquad \text{[Equation 10]}$$

This matrix contains the set of $N_k$ $DCT_{N_k}$ basis vectors. The $N_k$ vertical $DCT_{N_k}$ coefficient vectors are given by;

$$\underline{c}_{k,i} = \frac{2}{N_k} * DCT_{N_k} * \underline{l}_{Y,k,i}' \qquad \text{[Equation 11]}$$

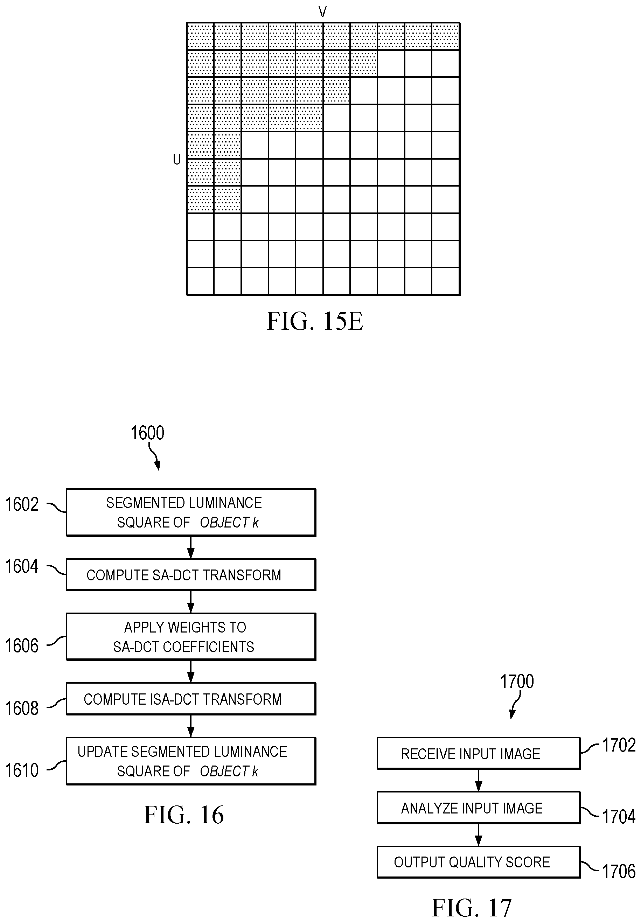

Here, $l_{Y,k,i}'$ is the $i^{th}$ column of $\underline{l}_{Y,k}'$. Let this full transformation be defined as $\underline{D}_k$. As a result, the vertical dimension of the pixels in this segmented object have been transformed, illustrated in FIG. 15C. Let $\underline{D}_k'$ be the result of shifting all pixels in this object horizontally towards the left of the square, illustrated in FIG. 15D. The horizontal $DCT_{N_k}$ transform is then applied to the rows $\underline{D}_k'$ to obtain the fully transformed SA-DCT output, $\underline{D}_k''$, illustrated in FIG. 15E.

The reverse operations can be taken to transform an object in the SA-DCT domain to the spatial domain. Henceforth, the transformations from the spatial to SA-DCT domain and vice versa will be represented by the following operations, respectively: *SADCT()* and *ISADCT().* Though $\underline{D}_k''$ was used in the above example to represent the output of the full SA-DCT algorithm, for ease of notation, $\underline{D}_k$ will be used to represent the full SA-DCT transformation of the segmented $k^{th}$ object's luminance component, $l_{Y,k}.$ Thus, $\underline{\ddot{D}}_k^{(i)} = SADCT\left(\underline{\ddot{l}}_{Y,k}^{(i)}\right)$ represents the SA-DCT transformation of the $k^{th}$ segmented object in an image after it has undergone point cloud separation and point cloud expansion in iteration i.

FIG. 16 illustrates a method (1600) for an intra-object spatial enhancement operation using SA-DCT for an *Object k.* At block (1602) the method (1600) includes receiving a segmented luminance square of the *Object k,* as described with respect to FIGS. 15A-15E. At block (1604), the method (1600) includes computing the SA-DCT transform. At block (1606), the method (1600) includes applying a weighting function to the SA-DCT coefficients computed at block (1604). At block (1608), the method (1600) includes computing the ISA-DCT transform. At block (1610), the method (1600) includes updating the segmented luminance square of *Object k*.

The method (1600) provides for calculating the DCT of arbitrarily-shaped objects in an image. In this manner, the method (1600) accounts each object's DCT coefficients that have the potential to be modulated differently according to the iterative process (650).

Like the DCT transform coefficients, the SA-DCT transform coefficients in the top left corner of the transform matrix correspond with lower frequency information. To increase the spatial contrast inside the object, the higher value transform coefficients are increased using the following weights:

$$\omega(g,h) = \left(1 + \frac{\alpha-1}{N-1}g\right)\left(1 + \frac{\alpha-1}{N-1}h\right) \qquad \text{[Equation 12]}$$

where $\alpha$ is a hyper parameter that controls the strength of the weights and *g* and *h* represent the location of the SA-DCT transformed pixel to which the weight $\omega(g, h)$ will be applied. These weights are used to update $\underline{\ddot{D}}_k^{(i)}$ to $\underline{\ddot{\ddot{D}}}_k^{(i)}$ according to Equation (9):

$$\underline{\ddot{\ddot{D}}}_k^{(i)} = \left(1 + r_3^{(i)}(\omega - 1)\right) \odot \underline{\ddot{D}}_k^{(i)} \qquad \text{[Equation 13]}$$

In Equation (13), $r_3^{(i)}$ represents a learning rate, which may be adjusted in each iteration to ensure that the value of the image quality metric (GIQM) is improving. In Equation (13), $\odot$ represents the elementwise product operator. By applying the *ISADCT*() operator to $\underline{\ddot{D}}_k^{(i)}$, the updated segmented luminance component for *Object k*, $\underline{\ddot{I}}_{Y,k}^{(i)}$, for the *i*th iteration is recovered, which is then reincorporated into the entire luminance image component, $\ddot{Y}^{(i)}$. In some implementations, this approach is not absorbed into the iterative process. In other implementations, the weight matrix is applied to the DCT coefficients of the image at the end of the iterative process.

**Local Quality Metric**

The enhancements applied to each object during each iteration of the process (650) may be monitored. To ensure that image quality is improved each time an object is processed, a modified form of a lightweight image quality metric (LIQM) may be used to measure the local enhancement in an image each time each object is processed within an iteration. The formula for an example LIQM function is provided as Equation (14):

$$LIQM = AIE_c^{\delta} * AC_c^{\gamma}. \qquad \text{[Equation 14]}$$

In Equation (14), $\delta$ and $\gamma$ are hyper parameters, which have been empirically set to 1 and $\frac{1}{4}$, respectively. $AIE_c$ and $AC_c$ measure the average amount of entropy information and contrast in an image, respectively. $AIE_c$ and $AC_c$ are defined according to the *R, G,* and *B* components of an image, $I_{RGB}$. Specifically, $AIE_c$ is given by Equation (15):

$$AIE_c = \frac{1}{\sqrt{3}}\sqrt{IE_R^2 + {}+IE_G^2 + IE_B^2} \qquad \text{[Equation 15]}$$

In Equation (15), each *IE* term is defined according to the average entropy of the *R, G, or B* color component with which it is associated:

$$IE = -\sum_{x=0}^{2^{\beta}-1} prob(x) \log_2 prob(x) \qquad \text{[Equation 16]}$$

where *prob(x)* is the probability of the value *x* appearing in the channel.

$AC_c$ is defined according to Equation (17):

$$AC_c = \frac{1}{(H-1)(W-1)}\sum_{h=0}^{H-2}\sum_{g=0}^{W-2} C_c(g,h) \qquad \text{[Equation 17]}$$

where

$$C_c = \frac{1}{\sqrt{3}} \sqrt{Grad^2(R) + Grad^2(G) + Grad^2(B)} \qquad \text{[Equation 18]}$$

where Grad() is a gradient function.

By applying LIQM to the entire image after each object is processed, the amount of contrast that the enhanced object adds to the overall image is captured, as the current object is the only object that has been enhanced since the last time that LIQM was applied to the image. If the LIQM value reported after processing an object is larger than the LIQM value reported before the object was processed, then the changes applied to the current object are accepted. Otherwise, the enhancements are not accepted (i.e., the object won't change in the respective iteration).

**Global Quality Metric**

Returning to FIG. 6, before any iteration of process (650) begins, at block (606), a global image quality metric (GIQM) is applied to determine the quality of the original input image. Once the iterative process starts, the GIQM is recalculated at the end of each iteration at block (618) to ensure that the enhancements made to the image in each iteration improve the objective picture quality.

FIG. 17 illustrates an example architecture for a GIQM network (1700). At block (1702), the GIQM network (1700) receives the input image, such as the input image at block (602). At block (1704), the GIQM network (1700) analyzes the input image. In implementations where the enhancements made to the current image should be similar to those of a reference image to which the model is given access, a full reference image quality assessment (FR-IQA) model may be used for analysis. However, in many cases, the model may not have access to a reference image. In such cases, a no-reference image quality assessment (NR-IQA) may be used. In some implementations, NR-IQAs are modeled under the assumption that a specific form of distortion is present in the scene and needs to be removed. In other implementations, the NR-IQAs may instead use natural scene statistics (NSS) approaches that aim to find a subspace in the larger image space that comprises distortion-free images from the natural world. In some implementations, the GIQM network (1700) is a suitable neural network (NN) model, such as convolutional neural network (CNN) like the Neural Image Assessment (NIMA) model or Explicit Implicit Image Quality Assessment (EI-IQA) model. At block (1706), the GIQM network (1700) outputs a quality score indicating a quality of the input image.

**Iterative** Process **Flowchart with Learning** Rates

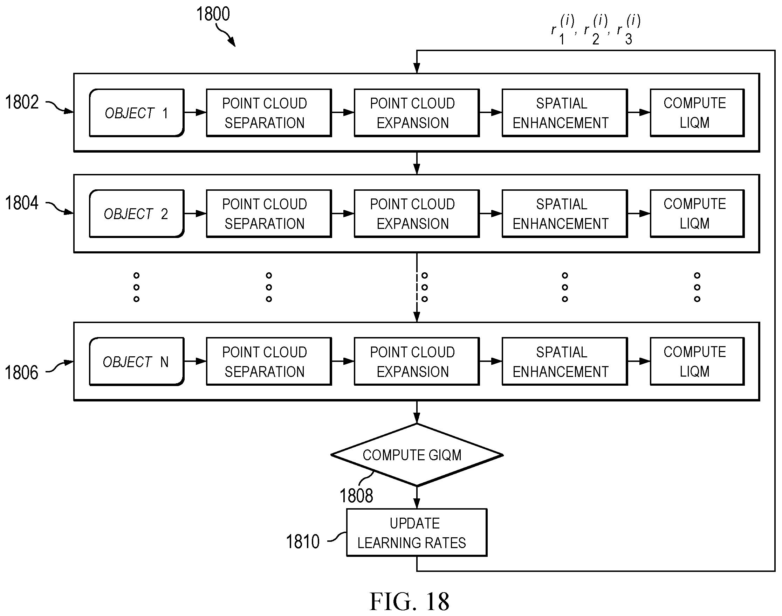

FIG. 18 provides a method (1800) illustrating the iterative process (650) in more detail. In block (1802), the method (1800) includes processing a first object. In block (1804), the method (1800) includes processing a second object. Each object is processed according to the previously-described graph structure until a final object is processed by block (1806). GIQM is computed at block (1808) at the end of each iteration on the output image. If the GIQM score has increased, the next iteration is initiated with the same learning rates. If the GIQM score has decreased, but the stopping criterion is not met, the next iteration may be initiated with the same learning rate as well. Although the GIQM has decreased, the LIQM may have increased, and therefore changing the learning rate may not be desired. If the GIQM score has not changed from the previous iteration, no changes have been made to any object in the current iteration, and the learning rates are decreased at block (1810).

The method (1800) is repeated until the learning rates become so small that the enhancements no longer lead to any significant improvements in the image's visual quality. Specifically, let $r^{(i-1)}$ represent one of these learning rates at the end of the $i$ - $1^{th}$ iteration. If the GIQM score has not changed since the $i$ - $1^{th}$ iteration, the new learning rate is $r^{(i)} = \frac{r^{(i-1)}}{\tau}$. In some implementations, $\tau$ is a positive constant set to 2. If the learning rate reduces below a threshold, the iterative process is terminated.

**Stopping Criterion**

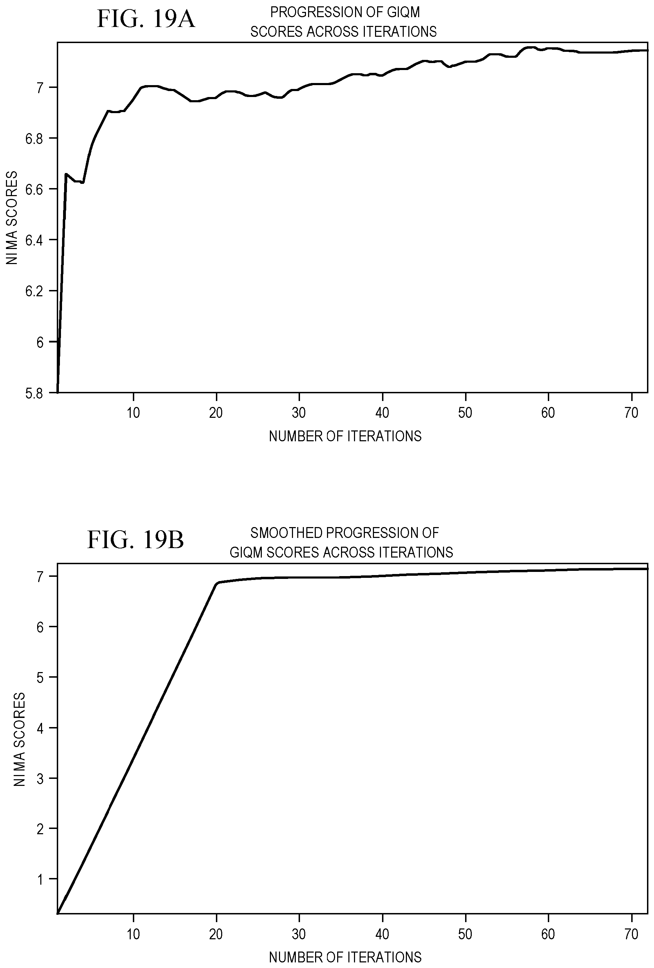

If unchecked, the iterative process may run for many iterations with no visible enhancements to the image. Additionally, if the image starts to degrade due to over-enhancement, the algorithm may be stopped. The GIQM scores are used to determine when to stop the iterative process. FIG. 19A illustrates a sample trend of the GIQM scores across all iterations. To avoid only observing local minima, the average of the last Q GIQM scores may be used to see a smoothened trend, illustrated in FIG. 19B. The trend consistently increases until convergence. If the smoothened scores in FIG. 19B stagnate or decrease, then the algorithm is terminated and the best image until that iteration is output.

The above video delivery systems and methods may provide for enhancing images using graph-based inter- and intra- object separation. Systems, methods, and devices in accordance with the present disclosure may take any one or more of the following configurations.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claims.

Accordingly, it is to be understood that the above description is intended to be illustrative and not restrictive. Many embodiments and applications other than the examples provided would be apparent upon reading the above description. The scope should be determined, not with reference to the above description, but should instead be determined with reference to the appended claims, along with the full scope of equivalents to which such claims are entitled. It is anticipated and intended that future developments will occur in the technologies discussed herein, and that the disclosed systems and methods will be incorporated into such future embodiments. In sum, it should be understood that the application is capable of modification and variation.

All terms used in the claims are intended to be given their broadest reasonable constructions and their ordinary meanings as understood by those knowledgeable in the technologies described herein unless an explicit indication to the contrary is made herein. In particular, use of the singular articles such as "a," "the," "said," etc. should be read to recite one or more of the indicated elements unless a claim recites an explicit limitation to the contrary.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments incorporate more features than are expressly recited in each claim. Rather, as the following claims reflect, inventive subject matter lies in fewer than all features of a single disclosed embodiment. Thus, the following claims are hereby incorporated into the Detailed Description, with each claim standing on its own as a separately claimed subject matter.

## Claims

1. A video delivery system configured for iterative graph-based image enhancement of an image frame, the video delivery system comprising:

   a processor to perform processing of the image frame, the processor configured to:

   receive, for a plurality of objects within the image frame, the location of pixels composing the respective object;
   store the received locations corresponding to the plurality of objects in a segmentation map;
   extract individual objects from the image frame by using the segmentation map to generate a graph that characterizes the plurality of objects, the graph providing structural information about the order to process objects and how to process each object inside of the image frame;
   process the plurality of objects within the graph using an iterative enhancement process, wherein the enhancement of an object is based on properties of the object and its relationship with neighboring objects in the graph, wherein the iterative enhancement process comprises:

   performing an inter-object point cloud separation operation on the object, the inter-object point cloud separation separating luminance-saturation point clouds for objects from each other, so that objects stand out more from each other in the final image;
   expanding the plurality of pixels of the object by increasing the spread of pixels within a particular object, so that within-object pixel values stand out from and cover a greater luminance-saturation range; and
   performing a spatial enhancement operation on the plurality of pixels of the object; and

   generate an output image based on the inter-object point cloud separation operation, the expansion of the plurality of pixels, and the spatial enhancement operation, wherein the steps of performing the inter-object point cloud separation operation on the object, expanding the plurality of pixels of the object, and performing the spatial enhancement operation on the plurality of pixels of the object are iterated until the quality of the frame satisfies a quality threshold.

2. The video delivery system according to claim 1, wherein, when performing the inter-object point cloud separation operation on the object, the processor is configured to:

> compute a mean luminance of the object;
> compute a mean luminance of ancestors of the object from one or more previous iterations; and
> apply, based on the mean luminance of the object and the mean luminance of ancestors of the object, a sigmoid curve to the object to obtain a luminance shift of the object.

3. The video delivery system according to any one of claim 1 to claim 2, wherein, when expanding the plurality of pixels of the object, the processor is configured to:

> determine a mean luminance of the object;
> determine a current saturation of the object;
> update a luminance array of the object; and
> update a saturation array of the object based on the updated luminance array.

4. The video delivery system according to any one of claim 1 to claim 3, wherein, when performing the spatial enhancement operation on the plurality of pixels of the object, the processor is configured to:

> segment a luminance square of the object;
> compute shape adaptive discrete cosine transform SA-DCT coefficients; and
> apply a weighting function to the SA-DCT coefficients.

5. The video delivery system according to claim 4, wherein, when performing the spatial enhancement operation on the plurality of pixels of the object, the processor is further configured to:

> compute inverse SA-DCT coefficients; and
> update the segmented luminance square of the object based on the SA-DCT.

6. The video delivery system according to any one of claim 1 to claim 5, wherein the processor is further configured to:

> apply a global image quality metric - GIQM - to the image frame; and
> determine a quality of the frame based on an output of the GIQM.

7. An iterative method for image enhancement of an image frame, the method comprising:

> receiving, for a plurality of objects within the image frame, the location of pixels composing the respective object;
> storing the received locations corresponding to the plurality of objects in a segmentation map;
> extracting individual objects from the image frame by using the segmentation map to generate a graph that characterizes the plurality of objects, the graph providing structural information about the order to process objects and how to process each object inside of the image frame;
> processing the plurality of objects within the graph using an iterative enhancement process, wherein the enhancement of an object is based on properties of the object and its relationship with neighboring objects in the graph, wherein the iterative enhancement process comprises:

>> performing an inter-object point cloud separation operation on the object, the inter-object point cloud separation separating luminance-saturation point clouds for objects from each other, so that objects stand out more from each other in the final image;
>> expanding the plurality of pixels of the object by increasing the spread of pixels within a particular object, so that within-object pixel values stand out from and cover a greater luminance-saturation range; and

> performing a spatial enhancement operation on the plurality of pixels of the object; and
> generating an output image based on the inter-object point cloud separation operation, the expansion of the plurality of pixels, and the spatial enhancement operation, wherein the steps of performing the inter-object point cloud separation operation on the object, expanding the plurality of pixels of the object, and performing the spatial enhancement operation on the plurality of pixels of the object are iterated until the quality of the frame satisfies a quality threshold.

8. The method according to claim 7, wherein performing the inter-object point cloud separation operation on the object includes:

> computing a mean luminance of the object;
> computing a mean luminance of ancestors of the object from one or more previous iterations; and
> applying, based on the mean luminance of the object and the mean luminance of ancestors of the object, a sigmoid curve to the object to obtain a luminance shift of the object.

9. The method according to claim 8, wherein performing the inter-object point cloud separation operation on the object further includes:

> receiving a saturation array of the object; and
> updating the saturation array of the object based on the luminance shift of the object.

10. The method according to any one of claim 7 to claim 9, wherein expanding the plurality of pixels of the object includes:

> determining a mean luminance of the object;
> determining a current saturation of the object;
> updating a luminance array of the object; and
> updating a saturation array of the object based on the updated luminance array.

11. The method according to any one of claim 7 to claim 10, wherein performing the spatial enhancement operation on the plurality of pixels of the object includes:

> segmenting a luminance square of the object;
> computing shape adaptive discrete cosine transform SA-DCT coefficients; and
> applying a weighting function to the SA-DCT coefficients.

12. The method according to any one of claim 7 to claim 11, further comprising:

> applying a global image quality metric GIQM to the image frame; and
> determining a quality of the frame based on an output of the GIQM.

13. A non-transitory computer-readable medium storing instructions that, when executed by an electronic processor, cause the electronic processor to perform operations comprising the method according to any one of claim 7 to claim 12.

**Patentansprüche**

1. Videoübertragungssystem, das für die iterative graphenbasierte Bildverbesserung eines Bildrahmens konfiguriert ist, wobei das Videoübertragungssystem Folgendes umfasst:
einen Prozessor zum Durchführen von Verarbeitung des Bildrahmens, wobei der Prozessor konfiguriert ist:

> für eine Vielzahl von Objekten innerhalb des Bildrahmens die Positionen von Pixeln, die das jeweilige Objekt bilden, zu empfangen;
> die empfangenen Positionen entsprechend der Vielzahl von Objekten in einer Segmentierungskarte zu speichern;
> einzelne Objekte aus dem Bildrahmen durch Verwenden der Segmentierungskarte zu extrahieren, um einen Graphen zu erzeugen, der die Vielzahl von Objekten charakterisiert, wobei der Graph strukturelle Informationen über die Reihenfolge zum Verarbeiten von Objekten und darüber, wie jedes Objekt innerhalb des Bildrahmens zu verarbeiten ist, liefert;
> die Vielzahl von Objekten innerhalb des Graphen unter Verwendung eines iterativen Verbesserungsprozesses zu verarbeiten, wobei die Verbesserung eines Objekts auf Eigenschaften des Objekts und seiner Beziehung zu benachbarten Objekten im Graphen basiert, wobei der iterative Verbesserungsprozess Folgendes umfasst:
>
> > Durchführen einer Zwischenobjekt-Punktwolken-Trennungsoperation an dem Objekt, wobei die Zwischenobjekt-Punktwolken-Trennung die Luminanz-Sättigungspunktwolken für Objekte voneinander trennt, sodass sich die Objekte im endgültigen Bild mehr voneinander abheben;

Erweitern der Vielzahl von Pixeln des Objekts durch Vergrößern der Streuung von Pixeln innerhalb eines bestimmten Objekts, sodass Pixelwerte innerhalb des Objekts sich abheben und einen größeren Luminanz-Sättigungsbereich abdecken; und

Durchführen einer räumlichen Verbesserungsoperation an der Vielzahl der Pixel des Objekts; und

ein Ausgabebild basierend auf der Zwischenobjekt-Punktwolken-Trennungsoperation, der Erweiterung der Vielzahl von Pixeln und der räumlichen Verbesserungsoperation zu erzeugen, wobei die Schritte des Durchführens der Zwischenobjekt-Punktwolken-Trennungsoperation an dem Objekt, des Erweiterns der Vielzahl von Pixeln des Objekts und des Durchführens der räumlichen Verbesserungsoperation an der Vielzahl von Pixeln des Objekts wiederholt werden, bis die Qualität des Bildes einen Qualitätsschwellenwert erfüllt.

2. Videoübertragungssystem nach Anspruch 1, wobei der Prozessor beim Durchführen der Zwischenobjekt-Punktwolken-Trennungsoperation an dem Objekt konfiguriert ist:

eine mittlere Luminanz des Objekts zu berechnen;

eine mittlere Luminanz von Vorgängern des Objekts aus einer oder mehreren vorherigen Iterationen zu berechnen; und

auf Basis der mittleren Luminanz des Objekts und der mittleren Luminanz von Vorgängern des Objekts eine Sigmoidkurve auf das Objekt anzuwenden, um eine Luminanzverschiebung des Objekts zu erhalten.

3. Videoübertragungssystem nach einem von Anspruch 1 bis Anspruch 2, wobei der Prozessor beim Erweitern der Vielzahl von Pixeln des Objekts konfiguriert ist:

eine mittlere Luminanz des Objekts zu bestimmen;

eine aktuelle Sättigung des Objekts zu bestimmen;

ein Luminanzarray des Objekts zu aktualisieren; und

ein Sättigungsarray des Objekts basierend auf dem aktualisierten Luminanzarray zu aktualisieren.

4. Videoübertragungssystem nach einem von Anspruch 1 bis Anspruch 3, wobei der Prozessor beim Durchführen der räumlichen Verbesserungsoperation an der Vielzahl von Pixeln des Objekts konfiguriert ist:

ein Luminanzquadrat des Objekts zu segmentieren;

formadaptive diskrete Kosinustransformations-SA-DCT-Koeffizienten zu berechnen; und

eine Gewichtungsfunktion auf die SA-DCT-Koeffizienten anzuwenden.

5. Videoübertragungssystem nach Anspruch 4, wobei der Prozessor beim Durchführen der räumlichen Verbesserungsoperation an der Vielzahl von Pixeln des Objekts weiter konfiguriert ist:

inverse SA-DCT-Koeffizienten zu berechnen; und

das segmentierte Luminanzquadrat des Objekts basierend auf der SA-DCT zu aktualisieren.

6. Videoübertragungssystem nach einem von Anspruch 1 bis Anspruch 5, wobei der Prozessor weiter konfiguriert ist:

eine globale Bildqualitätsmetrik - GIQM - auf den Bildrahmen anzuwenden; und

eine Qualität des Rahmens basierend auf einer Ausgabe der GIQM zu bestimmen.

7. Iteratives Verfahren zur Bildverbesserung eines Bildrahmens, wobei das Verfahren Folgendes umfasst:

Empfangen, für eine Vielzahl von Objekten innerhalb des Bildrahmens, der Positionen von Pixeln, die das jeweilige Objekt bilden;

Speichern der empfangenen Positionen entsprechend der Vielzahl von Objekten in einer Segmentierungskarte;

Extrahieren einzelner Objekte aus dem Bildrahmen durch Verwenden der Segmentierungskarte, um einen Graphen zu erzeugen, der die Vielzahl von Objekten charakterisiert, wobei der Graph strukturelle Informationen über die Reihenfolge zum Verarbeiten von Objekten und darüber, wie jedes Objekt innerhalb des Bildrahmens zu verarbeiten ist, liefert;

Verarbeiten der Vielzahl von Objekten innerhalb des Graphen unter Verwendung eines iterativen Verbesserungsprozesses, wobei die Verbesserung eines Objekts auf Eigenschaften des Objekts und seiner Beziehung zu benachbarten Objekten im Graphen basiert, wobei der iterative Verbesserungsprozess Folgendes umfasst:

Durchführen einer Zwischenobjekt-Punktwolken-Trennungsoperation an dem Objekt, wobei die Zwischenobjekt-Punktwolken-Trennung die Luminanz-Sättigungspunktwolken für Objekte voneinander trennt, sodass sich die Objekte im endgültigen Bild mehr voneinander abheben;

Erweitern der Vielzahl von Pixeln des Objekts durch Vergrößern der Streuung von Pixeln innerhalb eines bestimmten Objekts, sodass Pixelwerte innerhalb des Objekts sich abheben und einen größeren Luminanz-Sättigungsbereich abdecken; und

Durchführen einer räumlichen Verbesserungsoperation an der Vielzahl der Pixel des Objekts; und

Erzeugen eines Ausgabebildes basierend auf der Zwischenobjekt-Punktwolken-Trennungsoperation, der Erweiterung der Vielzahl von Pixeln und der räumlichen Verbesserungsoperation, wobei die Schritte des Durchführens der Zwischenobjekt-Punktwolken-Trennungsoperation an dem Objekt, des Erweiterns der Vielzahl von Pixeln des Objekts und des Durchführens der räumlichen Verbesserungsoperation an der Vielzahl von Pixeln des Objekts wiederholt werden, bis die Qualität des Bildes einen Qualitätsschwellenwert erfüllt.

8. Verfahren nach Anspruch 7, wobei Durchführen der Zwischenobjekt-Punktwolken-Trennungsoperation an dem Objekt Folgendes einschließt:

Berechnen einer mittleren Luminanz des Objekts;

Berechnen einer mittleren Luminanz von Vorgängern des Objekts aus einer oder mehreren vorherigen Iterationen; und

Anwenden einer Sigmoidkurve auf das Objekt, basierend auf der mittleren Luminanz des Objekts und der mittleren Luminanz von Vorgängern des Objekts, um eine Luminanzverschiebung des Objekts zu erhalten.

9. Verfahren nach Anspruch 8, wobei Durchführen der Zwischenobjekt-Punktwolken-Trennungsoperation an dem Objekt weiter Folgendes einschließt:

Empfangen eines Sättigungsarrays des Objekts; und

Aktualisieren des Sättigungsarrays des Objekts basierend auf der Luminanzverschiebung des Objekts.

10. Verfahren nach einem von Anspruch 7 bis Anspruch 9, wobei Erweitern der Vielzahl von Pixeln des Objekts Folgendes einschließt:

Bestimmen einer mittleren Luminanz des Objekts;

Bestimmen einer aktuellen Sättigung des Objekts;

Aktualisieren eines Luminanzarrays des Objekts; und

Aktualisieren eines Sättigungsarrays des Objekts basierend auf dem aktualisierten Luminanzarray.

11. Verfahren nach einem von Anspruch 7 bis Anspruch 10, wobei Durchführen der räumlichen Verbesserungsoperation an der Vielzahl von Pixeln des Objekts Folgendes einschließt:

Segmentieren eines Luminanzquadrats des Objekts;

Berechnen von formadaptiven diskreten Kosinustransformations-SA-DCT-Koeffizienten; und

Anwenden einer Gewichtungsfunktion auf die SA-DCT-Koeffizienten.

12. Verfahren nach einem von Anspruch 7 bis Anspruch 11, weiter umfassend:

Anwenden einer globalen Bildqualitätsmetrik GIQM auf den Bildrahmen; und

Bestimmen der Bildqualität basierend auf einer Ausgabe der GIQM.

13. Nichtflüchtiges computerlesbares Medium, das Anweisungen speichert, die, wenn sie von einem elektronischen Prozessor ausgeführt werden, bewirken, dass der elektronische Prozessor Operationen durchführt, die das Verfahren nach einem von Anspruch 7 bis Anspruch 12 umfassen.

**Revendications**

1.  Système de diffusion vidéo configuré pour l'amélioration itérative d'une image basée sur un graphique, le système de diffusion vidéo comprenant :

    un processeur pour effectuer le traitement de la trame d'image, le processeur étant configuré pour :

    recevoir, pour une pluralité d'objets dans la trame d'image, l'emplacement des pixels composant l'objet respectif ;
    stocker les emplacements reçus correspondant à la pluralité d'objets dans une carte de segmentation ;
    extraire des objets individuels de la trame d'image en utilisant la carte de segmentation pour générer un graphique qui caractérise la pluralité des objets, le graphique fournissant des informations structurelles sur l'ordre de traitement des objets et sur la manière de traiter chaque objet à l'intérieur de la trame d'image ;
    traiter la pluralité d'objets au sein du graphe à l'aide d'un processus d'amélioration itératif, dans lequel l'amélioration d'un objet est basée sur les propriétés de l'objet et sa relation avec les objets voisins dans le graphique, dans lequel le processus d'amélioration itératif comprend :

    la réalisation d'une opération de séparation de nuages de points inter-objets sur l'objet, la séparation de nuages de points inter-objets séparant les nuages de points de luminance-saturation des objets les uns des autres, afin que les objets se détachent davantage les uns des autres dans l'image finale ;
    l'extension de la pluralité des pixels de l'objet en augmentant la dispersion des pixels au sein d'un objet particulier de sorte que les valeurs des pixels à l'intérieur de l'objet se détachent et couvrent une plus grande plage de luminance-saturation ; et
    la réalisation d'une opération d'amélioration spatiale sur la pluralité de pixels de l'objet ; et

    générer une image de sortie sur la base de l'opération de séparation du nuage de points inter-objets, l'extension de la pluralité de pixels et l'opération d'amélioration spatiale, dans lequel les étapes de réalisation de l'opération de séparation du nuage de points inter-objets sur l'objet, d'extension de la pluralité de pixels de l'objet et de réalisation de l'opération d'amélioration spatiale sur la pluralité de pixels de l'objet sont itérées jusqu'à ce que la qualité de la trame satisfasse un seuil de qualité.

2.  Système de diffusion vidéo selon la revendication 1, dans lequel lors de la réalisation de l'opération de séparation du nuage de points inter-objets sur l'objet, le processeur est configuré pour :

    calculer la luminance moyenne de l'objet ;
    calculer la luminance moyenne des ancêtres de l'objet à partir d'une ou plusieurs itérations précédentes ; et
    appliquer, sur la base de la luminance moyenne de l'objet et la luminance moyenne des ancêtres de l'objet, une courbe sigmoïde à l'objet pour obtenir un décalage de luminance de l'objet.

3.  Système de diffusion vidéo selon l'une quelconque de la revendication 1 à la revendication 2, dans lequel lors de l'extension de la pluralité de pixels de l'objet, le processeur est configuré pour :

    déterminer la luminance moyenne de l'objet ;
    déterminer la saturation actuelle de l'objet ;
    mettre à jour un tableau de luminance de l'objet ; et
    mettre à jour le tableau de saturation de l'objet en fonction du tableau de luminance mis à jour.

4.  Système de diffusion vidéo selon l'une quelconque de la revendication 1 à la revendication 3, dans lequel lors de la réalisation de l'opération d'amélioration spatiale sur la pluralité de pixels de l'objet, le processeur est configuré pour :

    segmenter un carré de luminance de l'objet ;
    calculer les coefficients de la transformée en cosinus discrète adaptative de forme SA-DCT ; et
    appliquer une fonction de pondération aux coefficients SA-DCT.

5.  Système de diffusion vidéo selon la revendication 4, dans lequel lors de la réalisation de l'opération d'amélioration spatiale sur la pluralité de pixels de l'objet, le processeur est en outre configuré pour :

    calculer les coefficients inverses SA-DCT ; et
    mettre à jour le carré de luminance segmenté de l'objet en fonction de la SA-DCT.

**6.** Système de diffusion vidéo selon l'une quelconque de la revendication 1 à la revendication 5, dans lequel le processeur est en outre configuré pour :

appliquer une métrique globale de qualité d'image (GIQM) à la trame d'image ; et
déterminer la qualité de la trame en fonction d'une sortie du GIQM.

**7.** Procédé itératif d'amélioration d'image d'une trame d'image, le procédé comprenant :

la réception, pour une pluralité d'objets dans la trame d'image, de l'emplacement des pixels composant l'objet respectif ;
le stockage des emplacements reçus correspondant à la pluralité d'objets dans une carte de segmentation ;
l'extraction des objets individuels de la trame d'image en utilisant la carte de segmentation pour générer un graphique qui caractérise la pluralité des objets, le graphique fournissant des informations structurelles sur l'ordre de traitement des objets et sur la manière de traiter chaque objet à l'intérieur de la trame d'image ;
le traitement de la pluralité d'objets au sein du graphique à l'aide d'un processus d'amélioration itératif, dans lequel l'amélioration d'un objet est basée sur les propriétés de l'objet et sa relation avec les objets voisins dans le graphique, dans lequel le processus d'amélioration itératif comprend :

la réalisation d'une opération de séparation de nuages de points inter-objets sur l'objet, la séparation de nuages de points inter-objets séparant les nuages de points de luminance-saturation des objets les uns des autres afin que les objets se détachent davantage les uns des autres dans l'image finale ;
l'extension de la pluralité des pixels de l'objet en augmentant la dispersion des pixels au sein d'un objet particulier de sorte que les valeurs des pixels à l'intérieur de l'objet se détachent et couvrent une plus grande plage de luminance-saturation ; et

la réalisation d'une opération d'amélioration spatiale sur la pluralité de pixels de l'objet ; et
la génération d'une image de sortie sur la base de l'opération de séparation du nuage de points inter-objets, l'extension de la pluralité de pixels et l'opération d'amélioration spatiale, dans lequel les étapes de réalisation de l'opération de séparation du nuage de points inter-objets sur l'objet, d'extension de la pluralité de pixels de l'objet et de réalisation de l'opération d'amélioration spatiale sur la pluralité de pixels de l'objet sont itérées jusqu'à ce que la qualité de l'image satisfasse un seuil de qualité.

**8.** Procédé selon la revendication 7, dans lequel la réalisation de l'opération de séparation du nuage de points inter-objets sur l'objet inclut :

le calcul de la luminance moyenne de l'objet ;
le calcul de la luminance moyenne des ancêtres de l'objet à partir d'une ou plusieurs itérations précédentes ; et
l'application, sur la base de la luminance moyenne de l'objet et de la luminance moyenne des ancêtres de l'objet, d'une courbe sigmoïde à l'objet pour obtenir un décalage de luminance de l'objet.

**9.** Procédé selon la revendication 8, dans lequel la réalisation de l'opération de séparation du nuage de points inter-objets sur l'objet inclut en outre :

la réception d'un tableau de saturation de l'objet ; et
la mise à jour du tableau de saturation de l'objet en fonction du décalage de luminance de l'objet.

**10.** Procédé selon l'une quelconque de la revendication 7 à la revendication 9, dans lequel l'extension de la pluralité de pixels de l'objet inclut :

la détermination de la luminance moyenne de l'objet ;
la détermination de la saturation actuelle de l'objet ;
la mise à jour d'un tableau de luminance de l'objet ; et
la mise à jour du tableau de saturation de l'objet en fonction du tableau de luminance mis à jour.

**11.** Procédé selon l'une quelconque de la revendication 7 à la revendication 10, dans lequel la réalisation de l'opération d'amélioration spatiale sur la pluralité de pixels de l'objet inclut :

la segmentation d'un carré de luminance de l'objet ;

le calcul des coefficients de transformation en cosinus discret adaptative de forme SA-DCT ; et
l'application d'une fonction de pondération aux coefficients SA-DCT.

12. Procédé selon l'une quelconque de la revendication 7 à la revendication 11, comprenant en outre :

l'application d'une métrique globale de qualité d'image (GIQM) à la trame d'image
; et
la détermination de la qualité de la trame en fonction d'un résultat du GIQM.

13. Support non transitoire lisible par ordinateur stockant des instructions qui, lorsqu'elles sont exécutées par un processeur électronique, amènent le processeur électronique à effectuer des opérations comprenant le procédé selon l'une quelconque de la revendication 7 à la revendication 12.

FIG. 1

FIG. 3

FIG. 2A

FIG. 2B

FIG. 4A

FIG. 4B

FIG. 5A

FIG. 5B

FIG. 5C

QUEUE:

| B(0) | G(0) | F(1) | D(1) | E(2) |
|------|------|------|------|------|

FIG. 5D

QUEUE:

| G(0) | D(0) | F(1) | E(1) |
|------|------|------|------|

FIG. 5E

QUEUE:

| F(0) | E(0) | D(0) |
|------|------|------|

600

602

604

606

| RECEIVE INPUT IMAGE | → | BUILD GRAPH | ← | EVALUATE USING GIQM |

608 — SELECT NEXT NODE IN GRAPH HIERARCHY

650

610 — POINT CLOUD SEPARATION

612 — POINT CLOUD EXPANSION

614 — SPATIAL ENHANCEMENT

616 — LIQM

618 — GIQM

620 — STOP?   NO

YES

622 — OUTPUT HDR IMAGE

FIG. 6

FIG. 7

EP 4 441 706 B1

FIG. 8

OBJECT A

OBJECT C

900

910    OBJECT B

920

$\dot{m}_A^{(i)}$

$\dot{m}_B^{(i-1)}$

$\dot{m}_C^{(i)}$

$\dot{m}_{A3}^{(i)}$

## FIG. 9A

OBJECT A

900

OBJECT C    920

$\dot{m}_A^{(i)}$

$\dot{m}_{A_3}^{(i)}$

$\dot{m}_C^{(i)}$

## FIG. 9B

FIG. 9C

AFTER ITERATION *i*-1

AFTER ITERATION *i*

900 △ FIRST OBJECT
910 □ SECOND OBJECT
920 ○ THIRD OBJECT

FIG. 10

1200

1220

● OBJECT *k*

FIG. 12

EP 4 441 706 B1

1100

| 1102 | 1104 | 1110 | 1112 |
|---|---|---|---|
| CURRENT LUMINANCE ARRAY OF *OBJECT k* | COMPUTE MEAN LUMINANCE OF *OBJECT k* | APPLY SIGMOID CURVE TO OBTAIN *OBJECT k'S* LUMINANCE SHIFT | UPDATED LUMINANCE ARRAY OF *OBJECT k* |

| 1106 | 1108 | | |
|---|---|---|---|
| UPDATED LUMINANCE ARRAYS OF *OBJECT k'S* ANCESTORS | COMPUTE MEAN LUMINANCE OF *OBJECT k' S* ANCESTORS | | |

1114

| | 1116 | 1118 |
|---|---|---|
| CURRENT SATURATION ARRAY OF *OBJECT k* | UPDATE *OBJECT k'S* SATURATION BASED ON UPDATED LUMINANCE | UPDATED SATURATION ARRAY OF *OBJECT k* |

FIG. 11

1400

| 1402 | 1404 | 1406 | 1408 |
|---|---|---|---|
| CURRENT LUMINANCE ARRAY OF *OBJECT k* | COMPUTE MEAN LUMINANCE OF *OBJECT k* | UPDATE *OBJECT k* LUMINANCE | UPDATED LUMINANCE ARRAY OF *OBJECT k* |

| 1410 | | 1412 | 1414 |
|---|---|---|---|
| CURRENT SATURATION ARRAY OF *OBJECT k* | | UPDATE *OBJECT k* SATURATION BASED ON UPDATED LUMINANCE | UPDATED SATURATION ARRAY OF *OBJECT k* |

FIG. 14

FIG. 13

1310

1330

1350

1300

1320

1340

SEPARATION

EXPANSION

900 FIRST OBJECT
910 SECOND OBJECT
920 THIRD OBJECT

$m_A^{(i-1)}$  $m_B^{(i-1)}$  $m_C^{(i-1)}$

$\tilde{m}_A^{(i)}$  $\tilde{m}_B^{(i)}$  $\tilde{m}_C^{(i)}$

A  B  C

S

Y

FIG. 15A

FIG. 15B

FIG. 15C

FIG. 15D

V

U

FIG. 15E

1600

| 1602 | SEGMENTED LUMINANCE SQUARE OF *OBJECT k* |
| 1604 | COMPUTE SA-DCT TRANSFORM |
| 1606 | APPLY WEIGHTS TO SA-DCT COEFFICIENTS |
| 1608 | COMPUTE ISA-DCT TRANSFORM |
| 1610 | UPDATE SEGMENTED LUMINANCE SQUARE OF *OBJECT k* |

FIG. 16

1700

| RECEIVE INPUT IMAGE | 1702 |
| ANALYZE INPUT IMAGE | 1704 |
| OUTPUT QUALITY SCORE | 1706 |

FIG. 17

FIG. 18

FIG. 19A

PROGRESSION OF GIQM
SCORES ACROSS ITERATIONS

FIG. 19B

SMOOTHED PROGRESSION OF
GIQM SCORES ACROSS ITERATIONS

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63285570
- EP 21212271

- WO 2011141853 A1

### Non-patent literature cited in the description

- Object-based multilevel contrast stretching method for image enhancement. **BEILEI XU et al.** IEEE Transactions on Consumer Electronics. IEEE Service Center, 01 August 2010, vol. 56, 1746-1754